(19) Europäisches Patentamt / European Patent Office / Office européen des brevets

(11) **EP 2 128 439 A1**

(12) **EUROPEAN PATENT APPLICATION**

(43) Date of publication:
    **02.12.2009 Bulletin 2009/49**

(51) Int Cl.:
    *F03D 9/00* (2006.01)      *F03D 9/02* (2006.01)

(21) Application number: **08156970.9**

(22) Date of filing: **27.05.2008**

(84) Designated Contracting States:
    **AT BE BG CH CY CZ DE DK EE ES FI FR GB GR HR HU IE IS IT LI LT LU LV MC MT NL NO PL PT RO SE SI SK TR**
    Designated Extension States:
    **AL BA MK RS**

(71) Applicant: **Syneola SA**
    **2034 Peseux (CH)**

(72) Inventors:
    • **Hess, Joseph**
      **2022 Bevaix (CH)**
    • **Muller, Myriam**
      **2022 Bevaix (CH)**

(74) Representative: **Balsters, Robert et al**
    **Novagraaf SA**
    **25, Avenue du Pailly**
    **1220 Les Avanchets - Geneva (CH)**

(54) **An intelligent decentralized electrical power generation system**

(57)    A novel, small size system for intelligent, decentralized electrical power generation is disclosed which uses at least 2 sources of ambient energy in a novel synergistic way and has a wide field of application. These sources of energy can be external or internal relative to a point of energy consumption.

This hybrid electrical power generation system (1) comprises a duct (10) constituting an aerodynamic backbone and comprising a wind generator (30) and a photovoltaic energy converter (20), and a current generating unit (25). The wind generator (30) is a vertical axis wind turbine (VAWT), and the photovoltaic energy converter (20) is a solar cell positioned in the immediate vicinity of said duct (10). The wind generator (30) and the photovoltaic energy converter (20) are connected to and arranged so as to both power the current generating unit (25).

According to some of its embodiments, the system according to the invention is applicable to supplying a variety of fixed and mobile power consuming entities with partial, total and excess electrical power. At least a third source of energy may be added advantageously. As such the system can be used as an integral element of a distributed energy generation network or for remote, stand-alone applications.

Physically, the system consists firstly of at least one single or multiple converter of at least one natural ambient or derived source of energy existing at the point of use and being converted into electrical energy. Secondly, and more importantly it features a novel, constructive backbone exploring common energy streams of co-existing sources of ambient energy to constitute a synergistic electrical power generation system together with these and other energy sources. It further consists of a self-contained ambient sensing unit and of an energy synergy management system. The latter comprises a communication module, a networking module, a module for compiling patterns of energy supply and consumption as well as of real time local ambient conditions, a novel graphic user interface and an energy storage and transmission entity.

Figure 3: Roof top SSMBWT wind plus photovoltaic solar energy & aerodynamic backbone on gas heating chimney or forced venting system in conjunction with thermal solar panels

wind generator 30

Flexible or fixed photovoltaic solar panel support and aerodynamic backbone 10

Current generating Unit 25

solar panel housing

Fixed or flexible solar panel 20

Existing gas heating chimney or forced venting outlet 10

Combined aerodynamic backbone 10 of thermal and PV solar panel housing with gas heating chimney or forced venting outlet

Air inlets 35 for warm air from below the thermal and PV solar panels, from the roof or facade surface

3e: $P_{SY} = P_W \times \Sigma_w + P_S \times \Sigma_s$

**Description**

**Introduction**

The present invention addresses efficiency and ubiquity problems posed by decentralized, locally embedded electrical power generation. In its basic embodiment it exploits the 2 most common sources of renewable energy, wind and sun, as well as information about their occurrence and intensity in a synergistic way.

Through its modular, synergistic construction and transparent functionality, the invention is applicable to networked decentralized power generation. It can further be applied to power generation for mobile applications of different size and type.

**Background of the invention**

The invention inscribes itself into the domain of intelligent decentralized, i.e. locally embedded energy generation systems. Its components, their background and the inventive vector presented by the present disclosure will be described as follows.

Wind Power

In trying to change the present course of history, resulting from high energy cost, global warming and ambient pollution, concerned technologists concentrate, among other areas, on the use of renewable energies, like wind and solar energy capturing devices like wind-wheels, wind-turbines, active and passive solar cells as well as suitable control and communication systems.

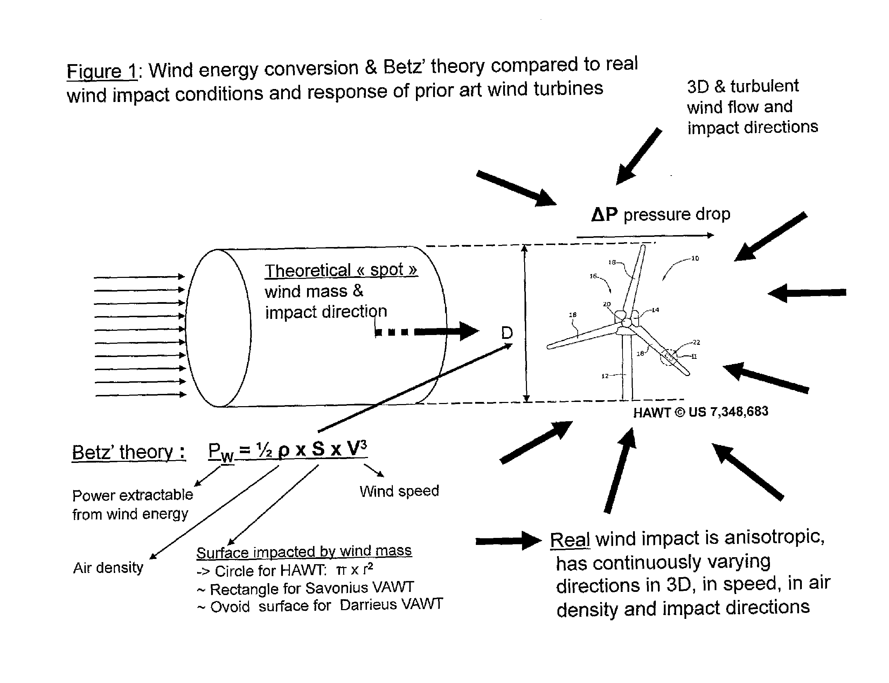

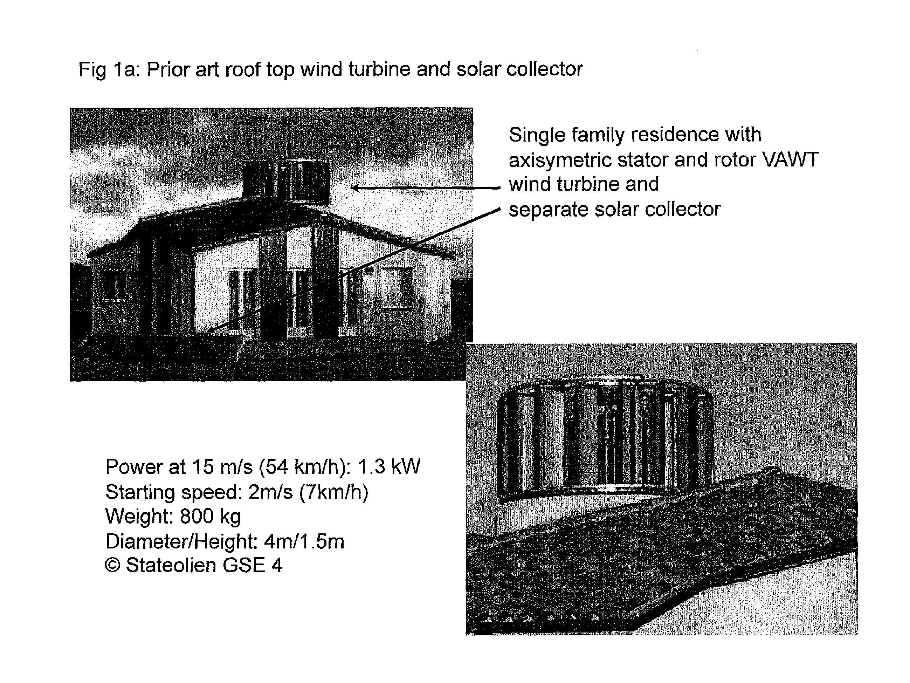

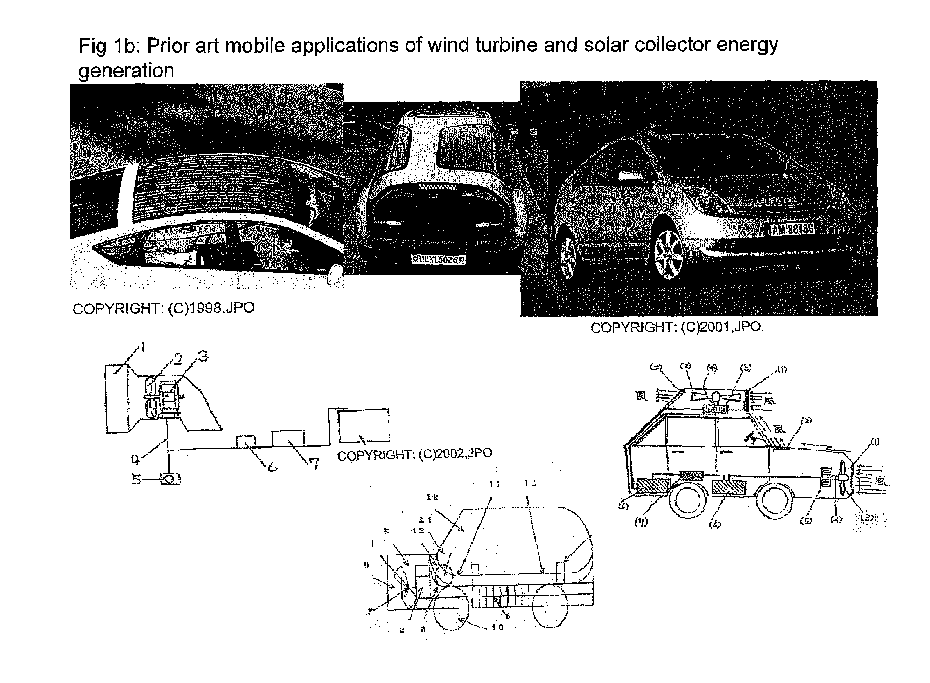

In reference to wind-power, the paper "Harvesting the Wind: The Physics of Wind Turbines" by Kira Grogg, © Carleton College, 13.04.2005" and the information conveyed by the Danish Wind Industry Association under www.wind-power.org is most informative. Basic facts are communicated: The energy content of the wind varies with the cube of the wind speed "V", proportionally to the air density "ρ" and the surface "S" of the object swept by the wind and used to extract energy from it. (Betz' theory: $Pw = \frac{1}{2} \rho \times S \times V^3$). The principle is shown in Figure 1: Wind energy conversion & Betz theory compared to real wind impact conditions and response of prior art wind turbines.

Roofs divert and accelerate wind flow into certain flow patterns that temporarily increase the volume of air over time flowing over a particular roof contour and its proximity. Volume of air over time equates to energy density, hence capturing the wind at this source point might be an intelligent choice. However, as shown in Figure 1, the resulting airflow is anisotropic, often turbulent and unpredictable in its temporal behaviour, direction and force. This remains true on a local and even regional basis. However a large number of users could benefit from an individually small but for them relatively important contribution resulting from this renewable wind energy. Considering the fact that solar energy is available at the same spot and often at the same time, increases the interest of an embodiment that places a synergistic system directly on that point of wind and solar energy impact. Of course, as the person reasonably familiar with the situation may observe, there will arise potential aero- and thermodynamic opportunities for synergy between these 2 co-existing energies at a given spot.

The traditional wisdom for wind generators however seems to be that they have to be Horizontal Axis Wind Turbines (HAWT). This type is declared to be the most efficient and able to convert the most wind energy into electrical power. The consequence of this reasoning is to locate them at an isolated, wind-exposed location, such as at a mountain ridge or in the ocean behind the shoreline.

Another rule seems to be that these HAWTs should have 2 or 3 blades with always increasing diameters, exploring the surface effect of the Betz' theory as indicated in Figure 1. This supposes that the larger the blade diameter, the more efficient the wind turbine. For a blade diameter of something like 300 ft, this might be true in offshore locations. But it is definitely not suitable for decentralized electrical power generation implemented on everybody's roof or yard. Anyone who travelled through the Midwest of the US or watched some old cowboy movies could have seen that once upon a time there were multi-blade farm wind mills of a design which today still appear as quite efficient. At the time though they were not at all or only little in use to generate electricity and even today they are rarely so.

Apparently the first large HAWT windmill producing electricity was built in Cleveland, Ohio, US in 1888 by Charles F. Brush and was operational for some 20 years.

By the mid 1920's there was the Jacobs Wind-electric turbine across the US bringing lighting to farms and charging batteries used to power the radios of the time.

Also in the 1920's in France, G.J.M Darrieus, started the development of vertical axis (VAWT) windmills.

Utility scale, bulk HAWT wind energy power seems to have been provided first by the 100 kW Balaclava facility on the shore of the Caspian Sea in 1931 and then around 1941 in Vermont with the 1.25 megawatt Palmer-Putman facility.

Today, and according to "Harvesting the Wind: The Physics of Wind Turbines" by Kira Grogg, © Carleton College, 13.04.2005, which concentrates on modern Horizontal Axis Wind Turbines (HAWT) wind turbines, these systems weigh something like 400 t, range to about 100 m in height, may have some 80 m in span and generate up to > 4.5 MW in power.

For wind generators that are called "small" by the trade, the rule seems to be to locate them at a distance of roughly 20 times the height of the house or other obstacle and a height of 4 times the height of the house or other obstacle, in the direction of the wind.

The tendency for very small HAWT based generators up to now has been to simply reduce the size of the big devices as well as the height and the distance to the house, without putting into question the HAWT design for that particular application or innovating beyond. According to this reasoning, the designs for the "home market" end up as small rooftop HAWT wind generators.

However even small versions producing sometimes less than 1 kW (one kilowatt or 1000 watts) may need poles that are several meters high because they don't handle turbulent airflow well.

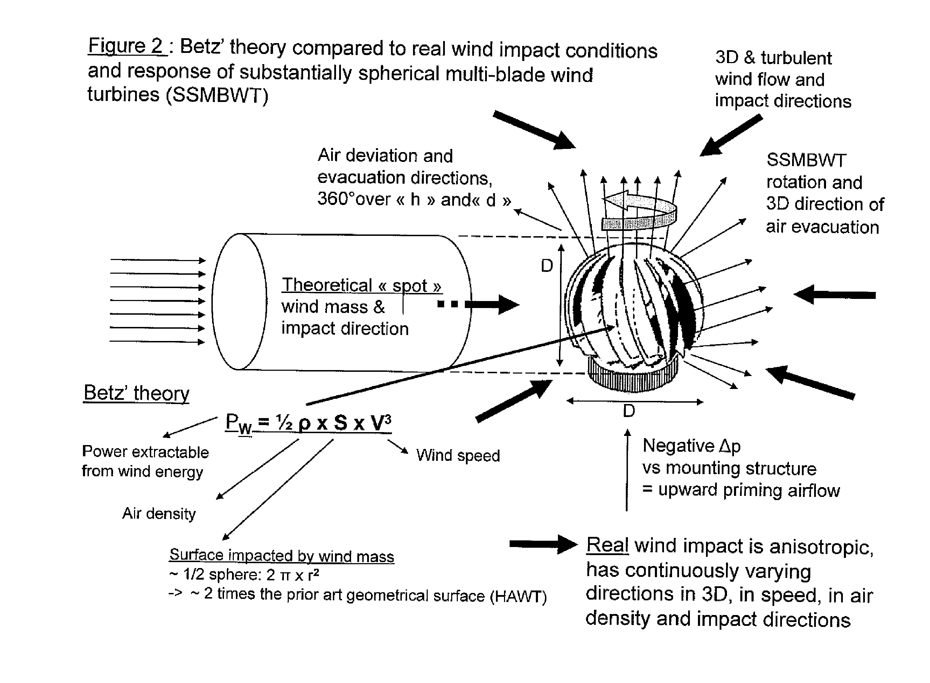

For further theoretical wind energy related details, like the Betz' theory on the ideal use of the wind energy as cited in Figures 1 and 2 of the present invention, the background information was provided at the time of editing the present invention by © by www.windpower.org by the Danish Wind Industry Association.

Located close to the roof surface, wind turbines could indeed at least theoretically benefit from a lot of high density, mixed laminar and turbulent energy flow and small-scale tunnel and hill effects. HAWT and VAWT based generators are particularly ineffective in using this type of prevalent energy flow. Suitable wind turbines need to be of a compact tri-dimensional shape, relatively close to the roofs surface. A 3D shape, for example a close to spherical shape, immediately features a considerably larger exposed surface compared to the flat surface of an HAWT turbine with an equivalent diameter. For example the surface of a half-sphere exposed to the wind is equivalent to $1/2$ of $4\pi \times r^2$, thus doubling the surface compared to Horizontal (HAWT) wind turbines of a swept circular surface of $\pi \times r^2$ corresponding to the same diameter. If the wind speed is only 2 m/s or 200 cm/s and if the radius of the spherical wind turbine is 25 cm, the wind will impact the proximal end only 1/8 of a second before the distal end of the half-sphere, meaning that even at low speeds the twice at large surface is nearly impacted by the wind at the same time in its entirety. This means that the wind force is available to impact double the surface of HAWT's with a comparable diameter basically at the same time even at very low wind speeds.

Also compared to Vertical Axis Wind Turbines (VAWT) like Savonius and Darrieus types, transversal turbine types and other wind generators, vertically or horizontally mounted substantially spherical turbines could have a low pylon and can be architecturally attractive or at least have only a neutral impact.

It may seem evident to the person skilled in the art that such compact, tri-dimensional wind turbines, for example of a substantially spherical multi-blade construction as shown in Figure 2, if compared to real wind impact conditions will turn at even the slightest wind, specially if helped by a slight under-pressure in an air conduit underneath the turbine, thus further improving on Betz' theory. Indeed, according to observations made by the inventors, such turbines can turn at wind speeds ranging from < 2m/s to > 20 m/s. With some modifications resulting from CFD studies undertaken by the inventors and surface enhancement described in the present invention, they might be able to use the full Beaufort scale. Because of their substantially spherical shape they are able to respond to anisotropic upward, downward and horizontal wind from any direction. As is evident from Betz' Law, forces exerted onto the wind turbine increase in proportion to the cube of the wind speed.

Betz' law seems to have been conceived and used only for systems featuring substantially flat wind impact surfaces. But additionally to the larger impact surface advantage, a substantially spherical wind turbine body would offer an increased inherent resistance to external impact forces, this simply because of its spherical construction. As shown further on, this substantial spherical impact surface advantage can be increased by production methods in order to offer an even larger or otherwise aerodynamically enhanced surface than its corresponding geometrical surface.

Under these conditions, substantially spherical multi-blade wind turbines (SSMBWT) appear very much superior to many small and even larger HAWT and VAWT. Nevertheless, they do not seem to be in use in the field of local power generation.

One of the reasons could be that a spherical body held only by bearing equipped supports at both extremities suffers extreme forces on these supports especially in high speed, non-horizontal or highly turbulent winds. The famous, spherical faulty Taba Turbine at the Reno, Nevada Sparks Convention Center might have been hit by this problem. CFD studies available and undertaken by the inventors avoid though this very basic engineering problem.

Betz' Law does not seem to take into account the impact of a very light construction, opposing little mass to the wind. Again, the problem might be that it is formulated mostly for HAWTs. For VAWTs a low weight might not provide enough torque and make it easy for them to be stopped or to turn in the opposite direction. If their weight was to be increased however, they could no longer turn so easily and would no longer start at such a low wind speed.

In order to take advantage of laminar and turbulent air flows, roof mounted and façade mounted wind turbines, as used in the invention, should be lightweight and capable of turning independently of the incoming wind's direction in a given horizontal and inclined wind impact plane.

They should have an optimized impact surface, they should be tolerant to wind impact angles within the spherical impact surface and their construction should benefit from aerodynamic advantages inherent to their functional ambient environment

A substantially spherical multi-blade wind turbine (SSMBWT) as shown in Fig 2 overcomes the problems cited above by its innovative construction as will be shown in detail later. It can also be mounted vertically or horizontally as a spherical VAWT or HAWT, i.e. vertically or horizontally in relation to the supporting surface which is significant constructive advantage. Additionally because spherical wind turbines can be mounted advantageously on tubular or other suitable air ducting structures, they can operate in aerodynamic synergy with their surrounding elements. For example warm air rising in a venting duct or behind a façade or roof mounted solar panel, can be used to make the SSMBWT turn, hence lowering the starting torque needed for wind power generation.

The term of "substantially spherical" includes cut-off spherical, ovoid and oblate spherical with flattened top and in some cases also a flattened bottom portion with any number of multiple blades. CFD studies provide slight geometrical differences at the edge structures of the cut-off sphere, depending on the field of use but without impact on the basic structure of the SSMBWT.

Solar Power

As the co-originator of the wind on our planet, the sun is certainly the next candidate in the quest for recuperating renewable energy. Some speak of the "Solar Revolution" like © Travis Bradford, The MIT Press 2006, some speak of the "Solar Fraud" like Howard C. Hayden, © Vales Lake Publishing, LLC 2004.

The radiant energy falling on one square meter of earthly surface has been determined to be equivalent to 1367 W, i.e. 1367 W/m$^2$. (© Solar Physics 1981, 74, 209, Frölich C. & R.W. Brusa, Solar Radiation and its variation in Time).

Since no more than some 80% of this energy comes directly to the Earth, an irradiation value of 1000 W/m$^2$ has been accepted as a basis for calibration and comparative purposes. An additional 5 to 25 % is considered as diffuse solar radiation by so-called scattered light.

This diffuse portion of the sunlight is partially reflected on its path to the Earth. The amount of energy due to solar irradiation is proportional to the cosine of the solar zenith angle that is important for sun-tracking systems.

There are fixed and flexible "solar cells", silicon, amorphous silicon, poly-silicon, flexible poly-silicon, porous silicon, micro-porous silicon, non-silicon, organic and nano-technology based 3D solar technologies and others yet to come. In small solar cell systems, as used in the present invention, it is important to increase the usage time of light beyond the predominant productive period from 11.00 am to 1.00 pm and mostly to increase the use of diffuse light in order to increase the integral of electrical energy delivered over a longer period of time such as a year.

At 10 to 20% efficiency, photovoltaic systems today deliver between 50 to maybe 75 W/ m$^2$, some at less than 2 or 3 $ or € per Watt. Given the cost performance of these systems, they can be deployed in synergy with an efficient wind generator system as will be shown further on.

To express the energy received and produced in amounts of energy resulting from a particular surface over a period of time leads to expressing the integral of the solar energy over time on a given surface in J/m$^2$, i.e. Joules/square meters. The seasonal variation of the daily irradiation shows an increase in peak spreading from March to July and a decrease from August to October. The highest energy density is between 11 am and 1 pm with a peak around 1000 W/ m$^2$ on a clear day in sunny areas. In very sunny areas a square meter of surface can receive up to 10 kWh during a sunny day.

Whereas one might think that a rigid flat silicon solar cell of ~ 50W/m$^2$ would be superior to a ~ 20W/m$^2$, amorphous silicon or polysilicon flexible foil type, demonstrator installations have shown close to equivalent power supplied over a period of a year by same surface flat rigid silicon and flat flexible silicon oxide solar cells.

Further to the photovoltaic systems described above, there are the widely spread and immediately useful, non photovoltaic, "solar-thermal" devices. They heat water flowing in meandering pipe systems subjected to the sun's heat radiation and provide hot water for bath, shower, floor heating systems, heat pump systems and other heating and household utilities in many countries, but are not known to work in synergy with sometimes co-existing wind-turbines and photovoltaic solar cells.

So, on our Earth, the sun shines, the wind blows and their combined energy is used at ridiculously low levels as far as local installations are concerned.

Further, there are several effects additional to those generated by the sun and the wind. They relate to direct impact of temperature, speed, pressure and displacements which are experienced on simple but smart materials and which can be used to recuperate additional renewable energy and increase the efficiency of generating electricity locally as will be shown later.

Embedded local power generation

The invention is about particular, innovative, and simple to use, to install and to maintain equipment for sustainable, intelligent decentralized generation of electrical energy.

It is based on exploiting synergistically at least 2 ambient sources of convertible energy optimized in a novel way and using available ambient synergy effects via an aerodynamic backbone. Hence the invention applies to the field of small-scale, sustainable co-generation of electrical energy.

Sometimes this field is called "distributed generation" of electrical energy, sometimes it is called "decentralized generation". Sometimes it is called "co-generation" of electrical energy. Sometimes it is called "embedded generation".

All these denominations somehow imply that energy generation is an inherent feature of the energy consuming unit, be it a fixed or mobile unit like a house, a multi-housing unit, a residential complex, a factory, a waste recycling site or a car, a truck or a boat.

Hence co-generation, decentralized, distributed or embedded generation seem to be suitable terms in relationship with the invention, which addresses the electrical power generation needs of a much larger number of smaller energy consumers, but also of larger, but still small consumers such as commercial buildings and parking lots.

All four terms will be continued to be used as synonyms throughout the document.

According to an article called "Power to the people"©, by Bill Rohner, in the Jan/Feb 2006 issue of Energybiz Magazine (www.energycentral.com), about 25 % of the worlds population are still without electricity and that the projected growth rate over the next 20 years would be about 57%. Consequently the Program "Clean Energy for the 21st Century" of the US Department of Energy (DOE) invests into smaller turbines (100 to 350 kW) and components to make them more efficient and allow regional power generation or co-generation for large buildings in general and for industry.

In November 2007, the database of the European COGEN Challenge, (www.cogen.org) documented more than 1'000 small-scale co-generation projects throughout Europe.

According to (www.solarbuzz.com), "Distributed Energy Generation" ranges from 1 kW to 5 MW and happens close to the point of use. Whether 5 MW is actually small scale seems questionable, but this is not the focus of the invention.

Nevertheless, the notion of "dispatchable" Distributed Energy, meaning units featuring a reasonably predictable supply within a supply logistics is an important definition. Here, the locally co-generated energy supply needs to fit with the general, larger area system load curve, often by matching, meeting and exceeding demand. These systems may exceed high-demand "peak loads» and pass surplus power back to the grid, the utility power distribution network.

There are strictly "solar buildings" and "solar carport" installations, which use the sometimes enormous surfaces taken up by car parking lots at airports and available on large buildings. These are basically decentralized photovoltaic co-generation units. In one example they called "Solar Grove". (http://www.insidegreentech.com/814/solar-carports of 02.03.2007)

In contrast to such large co-generation units, it is the principle objective of the present invention to create a local, embedded electrical co-generation system, based on an efficient, synergistic use of locally available ambient energies.

The Article "The Case for Decentralized Generation of Electricity" by Carsten Thomas R. et al published © on 01.01.2005 at the Skeptical Inquirer, Volume 29, N° 1, ISSN: 01946730 states that Decentralized Generation of Electricity could save $ 5 trillion in capital investment, reduce power costs by 40% and cut greenhouse gases in half.

Even if the capital investment would somehow need to be brought up proportionally anyway, the opportunity alone to reduce long distance transmission loss which normally represents a ≥ 15% waste, is an obvious candidate for reduction in cost offered by decentralized generation.

Chapter 7 of "Energy and American Society- Thirteen Myths" by Benjamin K Sovacool and Richard F. Hirsh, © 2007 Springer, discusses the so-called sixth myth.

This myth appears to relate to the barriers to the introduction of distributed generation and the opinion that these barriers are primarily technical.

Dismissing the technical barrier myths, the author locates the impediments mostly on the level of:

- Difficulty in setting Universal Standards, for example site specific requirements, or common requirements for mixed solar and wind distributed generation units

- Variable and inconsistent Incentives for Renewable Energy

- Lingering Utility Monopoly Rules and History of Control

- Resistance to Change and Public Misunderstanding

Hence the authors conclude that the impediments are social, rather than technical.

The "Survey of Urban Wind Energy Technology" submitted by Charles Miles for "Sustainability and Built Environment" © in October 2006 mentions, among other facets of the interesting survey, 4 key social impediments or conversely, factors for success in decentralized (urban) co-generation:

-  <u>Noise</u> and <u>Efficient use</u> of the available wind resource

-  <u>Aesthetics</u> and <u>integration</u> into the architectural system

These objections are disappearing as fast or faster than those applied to the noise and the nuisance caused to domestic animals by Gottlieb Daimler's and Karl Benz's early "automobiles". It is nevertheless obvious that any electrical power generation system for local use such as envisioned by the inventor will consider minimizing the impact of these social impediments as an important objective. For example, because of its shape and impact surface advantage, a substantially spherical multi-blade power generating wind-turbine (SSMBWT) as per the invention will minimize the noise as well as the size compared to the HAWT or VAWT types. In fact, SSMBWTs are close to silent even at higher speeds.

Certainly, substantially spherical synergistic electrical power generating systems which also fit into the landscape seem to be unknown so far. But regarding the real benefits to the general public, obviously innovative, distributed co-generation needs to offer smaller, silent and efficient units with a significant savings appeal.

Looking closer through the publications shows that the components of co-generation or decentralized generation systems are sometimes called "micro-generators and micro-turbines", even if they generate in excess of 300 kW, equivalent to the consumption of 6'000 light bulbs of 50 W each.

For clarity with regards to the present disclosure, the inventor wants to respect the fact that micro-turbines and micro-generators are really known to be incorporated into micro-systems. Such micro-systems, mostly MEMS (Micro-Electro-Mechanical-Systems), are on a totally different relative scale of power and size. For example and reference regarding a micro-turbine, <u>www.onera.fr</u> under "Applied Aerodynamics" shows a millimetre size turbo-machine for micro-propulsion or for charging very small sized batteries). Consequently, the inventor considers "Micro-wind-turbine" is the term to be used exclusively for systems running inside a PC or other micro-applications.

The description of the background of the invention would not be complete without addressing the field of power distribution within the fixed or mobile power consuming entity.

The main difference between the two is that for fixed units like houses and other buildings, AC, Alternating Current, is the prevalent medium of power distribution.

However for mobile power consuming entities, like cars, trucks, buses and the like, DC, Direct Current is the prevalent power distribution method.

In this sense, an interesting forward-looking paper is: "Power Distribution Systems for Future Homes by PO-Wa Lee et al" by © IEEE, PEDS, published in 1999 for the "International IEEE Conference on Power Electronics and Drive Systems, PEDS 99", July 1999, Hong Kong). Its authors tried to cover the situation of the future home from the point of view of power consuming entities, feeding several power consuming elements in such a home. These would be "linear" (like heaters, ovens, dryers, incandescent lamps, etc), "non linear" (like washing machines, air-conditioners, hair dryer, power tools etc) and "low power factor load items"). Low power factor items would be TV, PC, fire alarm, security, various battery chargers and other domestic DC devices like some microwave ovens, massage devices etc.

The classification and its terms like "linear" or "non-linear" consumers as used in the publication and relating to any particular power consuming entities might be questioned by the person skilled in the art, knowing that neither is definable as "constant over time" for any of these said entities. The authors of "Power Distribution Systems for Future Homes by PO-Wa Lee et al as cited above, (© IEEE, 1999, also considered future demands like slow, overnight or fast, on the spot, charging load of the batteries of Electronic Vehicles (EV). They concluded on a nearly total DC power distribution system for these homes except for resistive, linear loads.

The chapter "Future Technology" of the article " Many States of Distribution" by James D. Bouford and Cheryl A. Warren, published by © IEEE Power & Energy Magazine of July/August 2007, tells us that " Distributed generation, communicating with and controlling customer equipment, circuit devices operating on their own "intelligence" and instantaneous data availability for any device or operating condition will change our distribution systems, and the way we run them, in ways that can only be imagined."

In the same magazine ©, Jin Zhong et al, authors of the article "Chinese Growing Pains" conclude that the investment in the function of "Power Generation" has increased, but that the investment in the function of Transmission and Distribution Networks (T&D networks) is lagging. This may be a logical sequence of events, but the speed of development in some areas requests higher "time to market" performance.

Again, in the same magazine, © IEEE Power & Energy Magazine of July/August 2007, the article "Powering Progress" by Shrikrishna A. Khaparde et al, treats a similar phenomenon. It concentrates on the situation in India instead of the one in China, but from a different perspective, based on the experiences of the North Delhi Power Limited (NDPL), including lessons about consumer orientation and behaviour.

According to the article "What Comes First?" by Richard Piwko et al, © IEEE Power and Energy Magazine, Volume 5, N°6 of November/December 2007, the challenge for wind energy transmission can be viewed as a "chicken and egg" where transmission line owners on one side might not be able to build high voltage transmission line to areas where there may be a high wind energy potential. On the other side, wind plant developers may not consider building a wind plant in these areas without having the transmission line in place. The same situation may well be true for solar plants. In the same magazine ©, Edgar A. DeMeo et al explore recent advances and insights for Wind Plant Integration in their article "Accommodating Wind's Natural Behavior". No mention is made of small, local wind turbines. It seems though that, among other factors from that study, short term-markets (e.g. ten minutes rather than an hour) can reduce wind integration costs. Multiple, local, very small wind plants in a geographically close region with similar natural wind behaviour should have a significant impact, more so if they are synergistically supplemented by equally small solar plants in the same geographic region.

At any rate, a quiet revolution is happening and will be progressing house by house. Incandescent light-bulbs are on their way out, LED and OLED equipped lighting is on its way, including solutions for traffic lights. The first "real" electric cars as well as intermediate technology hybrid-electric and plug-in hybrid electric cars are on the road. Natural gas heating systems with efficient boilers and heat pumps replace obsolete fuel heating systems, thermal solar panels and heat pumps provide the heat needed for hot water and floor heating. Some combinations of solar panels and heat pumps make it possible to eliminate fuel or gas based heating. Small, reliable fuel cells with low-pressure hydrogen storage or using biogas for home and mobile applications are just around the corner. Nanotechnology is revolutionizing rechargeable battery and ultra-capacitor technology, these developments will improve energy storage dramatically. Nanotechnology allows to build new high performance photovoltaic materials which due to their cellular nanotube shape use light from all sides in unprecedented efficiency. (© Georgia Institute of Technology Research News, 13.04.2007) Nanotechnology improves electrical conductivity and thermal properties of polymers to form smart materials (© MRS Bulletin, Volume 32, April 2007) and furthers the advances in energy storage (© IEEE Spectrum November 2007 on ultra-capacitors). Energy harvesting materials in general are becoming more and more available for industrial applications. Additionally, novel co-generation solutions like Vehicle-to-grid (V2G) emerge.

However as the person familiar with the art of ambient power generation can certainly be aware, distributed, fixed and mobile synergistic systems for local co-generation of electrical power from ambient and derived energy sources according to the invention are still not known.

Technically speaking, in order to optimize system overhead and minimize system complexity, the individual consumer will probably become close to independent from "the grid".

The grid will provide the "secure backbone and peak load supplier for all" and in some cases co-generation equipment and service.

## Description of prior art systems

The body of published prior art, know-how, requirements and recommendations relating to synergistic co-generation units consisting of wind and solar energy converters is voluminous. It needs to be analyzed first as it relates to the most obvious and prevalent forms of potential synergy.

Most examples of prior art strategy and execution seem to ignore the notion of "synergy" within and between "locally" available energy forms and their usage. This, as will become evident from the further disclosure, is the key factor of innovation inherent in the synergistic local electrical power co-generation system according to the invention

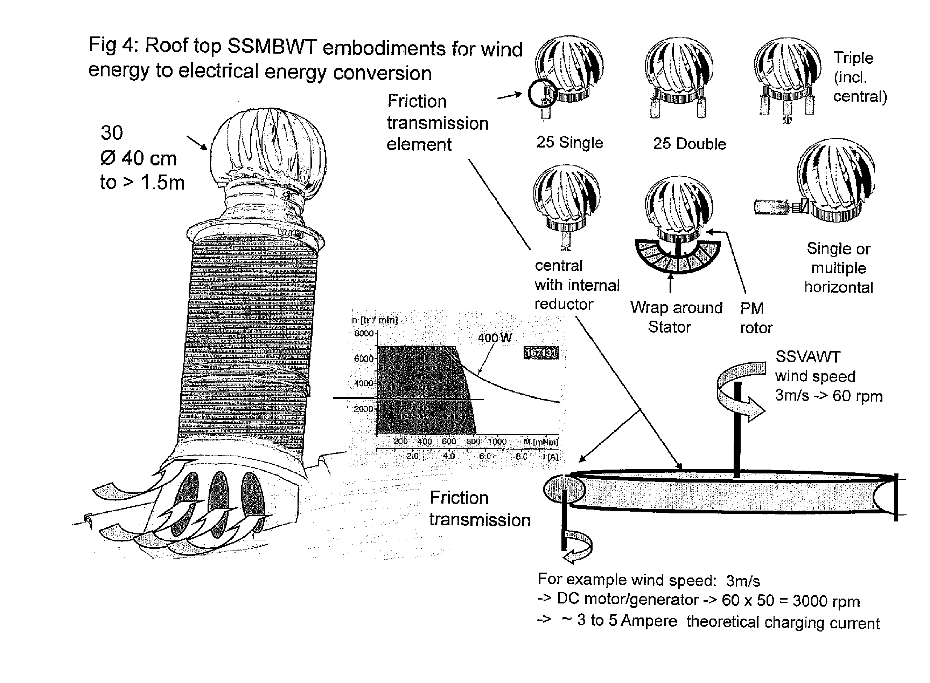

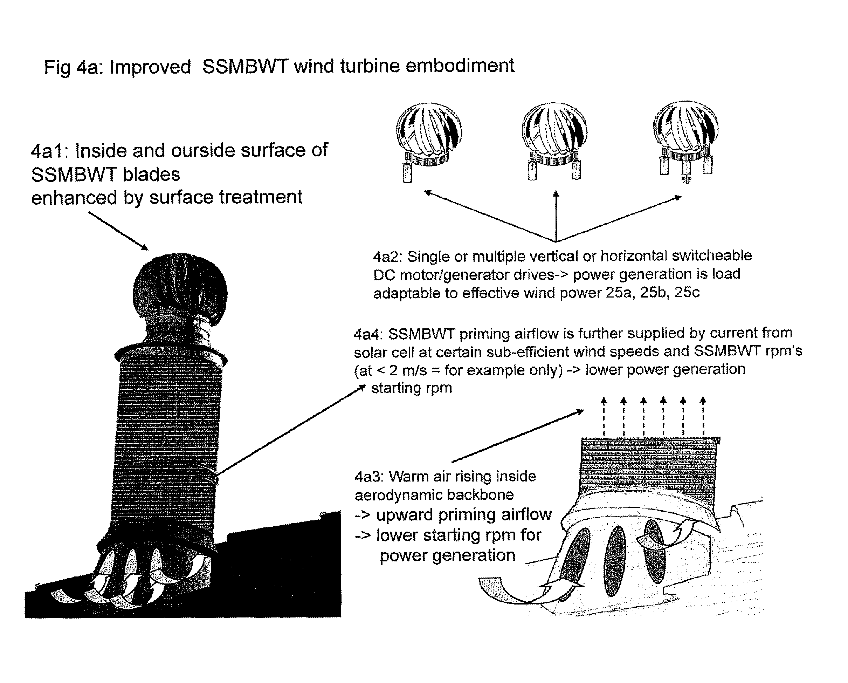

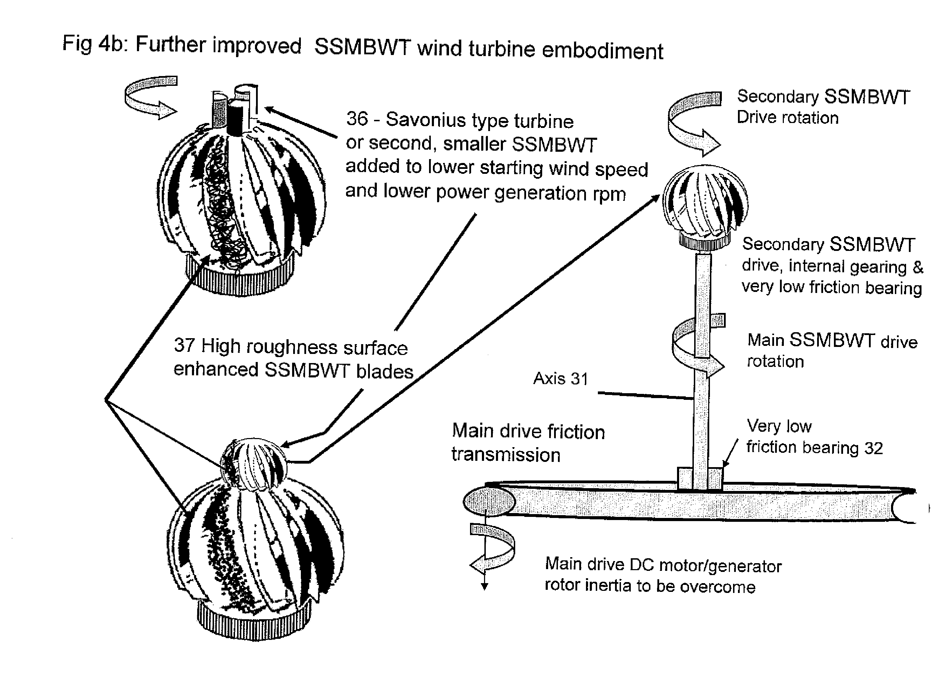

Kira Grogg, in his publication: "Harvesting the Wind: The Physics of Wind Turbines" (posted at Digital Commons@Carleton College, http://digitalcommons.carleton.edu/pacp/7) in Figure 4 seems to indicate a prevalent time pattern of the wind speed range during a number of hours per year. This pattern relates for example to a wind speed of 3m/s for 800 h/year and for 1000h/year at 5 m/s.

The study concludes with an average power generated from an HAWT turbine per wind speed as being ~ 3 kW for 3 m/s and 55 kW for 9 m/s according to J.G McGowan et al " Wind Energy Explained" © John Wiley & Sons, West Sussex, 2002.

As to solar energy, according to an article by Wim C. Sinke, Guest Editor, © MRS, Materials Research Society, "The Photovoltaic Challenge" the amount of solar energy reaching the earth is huge. The article states that it exceeds the total world energy consumption by a factor of roughly 10'000.

The conclusion offered is that, because of the high initial investment cost, a solar power generation plant may be difficult to justify and that there is room for technological improvement with various devices and materials.

The "2006 Minnesota Wind Integration Study" published © by the Minnesota Public Utilities Commission only considers wind scenarios relating to adding wind generation at a ratio of 15, 20 and 25% to the existing power supply and amortizing it via the normal grid supply.

No mention is made of distributed local wind and or solar co-generation schemes.

One example of a non-exhaustive, but serious study of the kind, is the report "Photovoltaics, Energy for the New Millennium" on the National Photovoltaics Program Plan 2000 -2004, produced © by the National Renewable Energy Laboratory for the U.S. Department of Energy. This national endeavour uses the resources of more than 180 universities, companies and utilities across the US. The 5-year program actually mentions a "Million Solar Roofs" Initiative, seeming oriented towards solar energy and technology only.

Under synergistic PV (Photovoltaic) products, the report understands a "one technology product" serving both heating and electricity generation functions, but not using 2 different energy sources in a synergistic multiple energy source configuration.

From the investor's side, reports continue to appear like "The UK Renewable

Revolution" (www.orbusinvestor.com), as are others like the one from the Power Group Program of the IEEE in the UK under www.iee.org/Oncommons/Branches.

A report related to the "Effect of Wind Development on Local Property Values", published by the Renewable Energy Policy Project, Washington, DC, can be found under WWW.repp.org.

News.com in their © article of February 10 2006 " Micro wind turbines are coming to town" introduce the notion that " A handful of start-ups are floating an idea that could change the face of the wind power industry". It relates to designing "micro" or rather small-scale wind turbines that fit on top of buildings. On second sight, the wind turbines in question are not "micro" at all, but they are well suited for flat-roofed commercial or industrial buildings.

(For more information, see AeroVironment and Aerotecture)

Finally, a further report entitled "A Study on Evaluating the Power Generation of Solar-Wind Synergistic Systems in Izmir, Turkey" by Koray Ulgen and Arif Hepbasli, has been published in 2003 © by Taylor & Francis under (DOI 10. 1080/00908310390142299).

This interesting report states the case of energy importing countries very well and gives an excellent overview of the potential use of solar and wind energy in a particular spot of a particular region through measurements of the daily local potential of both energy sources over several years, actually more or less between 1995 and 1999. The report concludes on the regional boundary conditions of a synergistic system operating in an area where both energies could readily cooperate. Of course, these could be different according to location and to the efficiency or size of the solar or wind generating combination and the individual contribution and control philosophy.

As such, the report remains unfortunately tied to the idea of a "fixed and constant supply power supply". This is not the objective of the present invention and alien to the potential use of the naturally neither fixed nor constant supply pattern of renewable energies, such as wind, sun, bio-mass, wave energy and the like.

The notion of "constant" is related to a central power supply, whereas if decentralized local power were to exist to a larger extent, the role of "constant" power supply could be re-defined as back-up power supply.

Given the earth's varying short-term local, temporal, seasonal and regional patterns of solar and wind energy potential, the report relates to the obvious: "The winds of change" in a courageous way and shows its complexity from the point of view of local implementation.

Same as the previous reports, it remains however silent on how to solve the dilemma of synergistic deployment of both local solar and wind energy converters, as well as on how to develop a synergistic exploitation of possible additional renewable energy sources.

With regards to synergistic or synergistic systems, Paul Kruger, is noted for his book © "Alternative Energy Sources: The Quest for Sustainable Energy". According to a book review published by the IEEE Power & Energy Magazine, among various interesting subjects, the book seems to give very little or no inspiration on renewable energy sources as far as synergistic contribution by local solar, wind, tidal, biomass and geothermal energy sources.

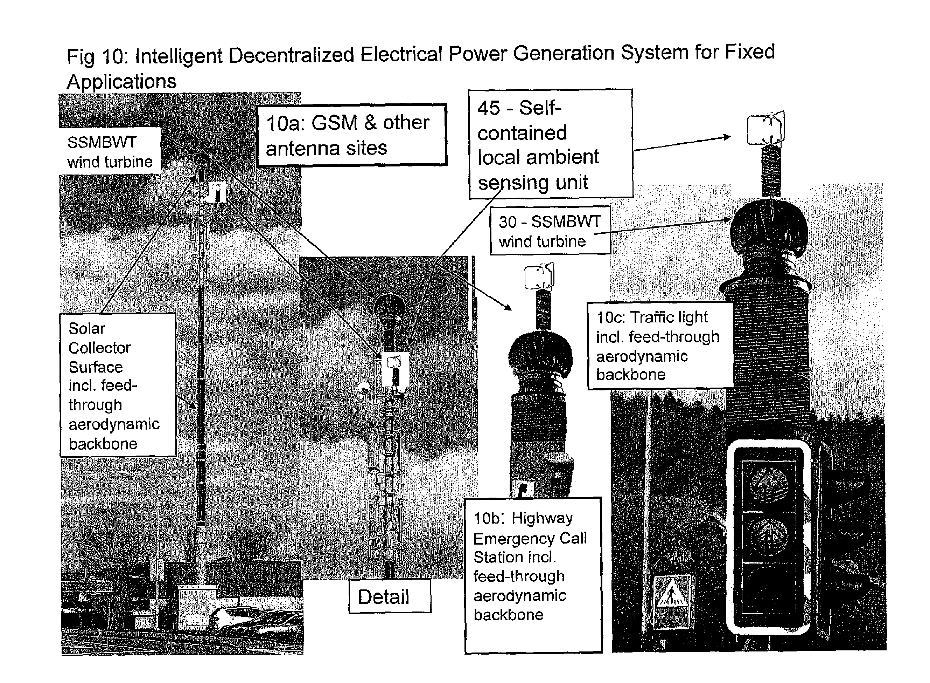

In the book "Solar Revolution" by Travis Bradford, © The MIT Press, Figure 10.1 on page 186 relates a combination of on-site solar and renewable hydrogen fuel cells as the most attractive solution in distributed generation from the point of view of fuel economics and general economics of distributed versus central power generation systems. Distributed wind generators are not considered an option, neither are synergistic, local solar/wind systems.

The paper "Impact of Distributed Synergistic Wind Electric Power Conversion Systems on the Electricity Distribution System" © 1997, published by the American Institute of Aeronautics and Astronautics Inc. relates to synergistic electricity generating systems consisting of one and more wind generators, stand-by diesel and other energy conversion or storage systems. The advantage of such "local" systems seems to be related to their closeness to their load.

This point is not trivial, since as said before, transmission of electricity over distances represents an important part of system loss, defined as ranging from 15% up to 20% of power generated. Hence local co-generation should avoid a major part of that problem.

On the other hand, the paper also shows the problems related to a grid with multiple individual and remote inputs from the point of view of the unpredictability of contribution.

Concrete problems relate to directing and re-directing electrical load flows, of coordination and decentralization of protective devices as well as of the effects on the voltage profile of the distribution system.

It can be expected that the grid surveillance and automation systems will be able to accommodate a multitude of small users and justify their economic reality by invoicing peak-loads and by generally assuring network stability and availability.

As published, most Synergistic Photovoltaic-Wind Power Systems in 2007 do not seem to be much different from the one described by P.A. Lessing in the 1997 article "A Synergistic Photovoltaic-Wind Power System for the National Data Buoy Center's (NDBC) Coastal Marine Automated Network". Data coming from this network belonging © to the National Oceanic and Atmospheric Adstration, the National Data Buoy Center at the Stennis Space Center, MS, USA, in support of the National Weather Center, are extremely important.

The system performance is indicative for what can be expected by urban and other decentralized synergistic co-generation or distributed electricity-generating systems under various climatic exposures. In effect, these systems are called synergistic, but they are nothing else than parallel, additive configurations of 2 different energy conversion systems.

There are publications on optimizing wind or solar plants, such as the article "Soft-Computing Model-Based Controllers for Increased Photovoltaic Plant Efficiencies" by Abdulhadi Varnham et al, © IEEE Transactions on Energy Conversion, Vol. 22, NO 4, December 2007.

Including all comments by well intentioned contributors, if a synergistic, individual, local co-generation system was able to only supply some 1000 W for at least two hours per day, this would correspond to 730 KWh within 365 days or ~ 16 % of the average annual electrical energy consumption (4'500 KWh) of a typical medium size residential dwelling. According to © EUROSTAT, this would equate to roughly 30% of the electrical energy consumption of a medium size apartment (2'500 KWh) and roughly 20% of the electrical energy consumption of a standard EU electrical consumer household (3'500 KWh). As can be expected from power saving technological and programming advances being made in lighting and white goods as well as in local power management systems, this demand level itself may very well decline in the next few years, making decentralized power generation even more attractive.

According to the "British Wind Energy Association" (BWEA) the average wind speed in the UK is about 5.6 m/s.

It is reported to be more or less the same in parts of India or other countries. This wind speed average shows sometimes huge differences in values captured at the housing level or at higher capturing locations.

At any rate, the prevailing wind speed expressed as a World Average is ~ 3m/s, the efficiency of rigid or flexible solar cells today is between a 5% and 40% and improving. (See www.physorg.com/news99904887.html)

Horizontal axis wind turbines (HAWT) and vertical axis wind turbine (VAWT), Savonius and Darrieus type systems in various configurations populate the spectrum of existing generating devices. The paper "Height Extrapolation of Capacity Factors for Wind Turbine Generators" by Suresh H. Jangamshetti et al, published © in the IEEE Power Engineering Review of June 1999 (ISSN 0282-1724/99/$10.00 © 1999 IEEE), shows very well that a higher hub height of a horizontal wind turbine leads to a higher efficiency, based on the relative Capacity Factors of two different wind generators. Nevertheless several local solutions exist:

- "Shield Innovations", in conjunction with the Tampere University of Technology, Finland, has created a specific vertical, collapsible and scalable wind turbine concept from portable to residential applications, in the range from 2 to 10 KW and well as permanent magnet technology for the generator.

- "Windside Turbines ©" have been around since the late seventies in Finland and rely on vertical wind turbines based on 2 spiral type vanes. However, beyond the fact of needing masts, these systems quickly become large, high and heavy.

- The publication, "Turby: Sustainable urban wind power from the rooftop" (© Delft Outlook 2005.2 by Bennie Mols) shows the difficult task and the iterations needed to obtain a satisfactory and reliable roof top system.

- Similar systems of different, vertical and horizontal types, some with patent protection and all with ©, are supplied by the following, certainly non exhaustive, list of companies:

- Travere Industries S.A.S;

- Volkswind with various horizontal and vertical types,

- ROPATEC, Vertical Energy, Windrotors in Germany;

- Hummer Dynamo in China,

- Fatronik in San Pedro, Elgoibar, Basque Country, Spain, a prototype which works in parallel with photovoltaic plates,

- SAWT of Shanghai Wind Technology Lid,

- Superwind,

- Windsave, with the WS 1000 and their "Plug'n'Save" system

- Vaigunth Ener Tek Ltd, by ECOFYS BV in Holland with the Urban Turbine System,

- Solwin Ltd in New Zealand which works in parallel with solar panels and features magnetic levitation,

- Swift Rooftop Wind Energy System™ with their Swift™ with a so-called environmentally neutral sustainable, "harm neutral" roof top design with a diameter of 2.1 m for 1.5 kW without mast,

- DuoGen Greenpeace@Glastonbury with the D400 wind-generator,

- The "Statron" parallel solar and wind-energy system for supplying larger power consumers such as telecommunications installations,

- Cleanfield Energy VAWT devices with advanced braking technology

- "Old-timers" such as "Southwest Windpower" with their "Skystream 3.7 ™" wind generator.

- The Windcatcher ©, pioneered by Monodraught, providing ventilation without mobile parts and the Sola-vent © also by Monodraught, using a solar powered extract fan for the purpose of building ventilation.

Some of these small to mid-size horizontal or vertical wind turbines, some with power units as small as 200W rated power might need a pillar height of more than 6 m and less than 20m, have a blade length or height of > 1 < 10 m and a weight of > 75 Kg without the pillar. Some HAWT systems rated for 1 KW power would already need a blade length of 2m, meaning a diameter of > 4m which is not suitable for an average residential unit.

Hence, most of these wind generators end up being installed away from the point of use of electrical energy and the loss of energy in the transmission cables might become considerable in comparison to the small amount of energy produced.

- AeroVironment and Aerotecture International Inc create opportunities for wind power supply to existing medium to large building rooftops, using Aeroturbines invented originally by Prof. Bill Becker of the Illinois University of Industrial Design.

- Mag-Wind Company, LLC, commercializes a magnetically levitated vertical rooftop wind generators, for example the MW-1100, produced by Vector Systems Inc in Texas, USA.
The heart of this device is roughly 1.2 m tall with a diameter of also 1.2 m, has a swept volume of nearly 2 $m^3$ with the shape of an elongated upside down drop for a promised 1'100 kWh per month or ~ 36 kWh per day, ~ 1.5 kW per hour for 24 hours with an average wind speed of 13m/h (~21 km/h, 5.8 m/s). At some places the wind may really blow at this speed for 24 h per day. However the device is able to work with wind speeds of > 100mph. But the World Average Wind speed being really only around 3m/s, it may be easier to reach the objective of 1'100 kWh per month with a smaller device turning earlier and more often, i.e. at lower wind speeds and faster at the most prevalent wind speeds.

- Gual Industrie in Rivesaltes, France, produces and commercializes a so-called roof-top device called "STATEOLIEN" which, according to company documentation, weighs 800 kg for 1.3 kW at 15 m/s wind speed (Stateolien GS 4) and weighs 2'500 kg for 6 kW at the same wind speed (Fig. 1a). As shown, such device is suitable for single family residence and uses a VAWT wind turbine and separate solar collectors. Again, it may be more economic and simpler to work with smaller devices turning at lower wind speeds and more often, i.e. bringing a more important area under the curve of embedded energy production.

The analysis of prior art as available at this time results in a number of horizontal and vertical wind energy using devices, some of them functioning in parallel with solar power generators.
For the purpose of clarity this prior art is classified according to:

- Horizontal turbines, Darrieus type turbines, Savonius type turbines and other vertical or horizontal type wind turbines

For clarity it must be said that attributing a particular type to a particular disclosure of invention is not always clear-cut, mixtures and extensions are leading to variants and improvements, which sometimes still resemble the "original", sometimes seem to be diverting from it.
Hence, the following enumeration of prior art is not an academic exercise but a bonafide, approximate organization of the relevant prior art as studied and felt important by the inventor as prior art with regards to the present disclosure.

**Prior art horizontal type wind generator turbines are represented by:**

- WO 2005/052362 A2 and WO 2005/052362 A3, Renewable Energy Resources, of 19.11.2003 by Gordon, David Hyman introducing multiple wind generators in a particular row configuration using different heights for different wind generators.

- US 2005/0180851 A1, Roof Mounted Wind Turbine, of 02.02.2002 by the same inventor introduces another roof mounted wind turbine.

- WO 03/067081 A1, Roof Mounted Wind Turbine, of 02.02.2002 by the same inventor introduces another roof mounted wind turbine.

- WO 02/068818 A1, Atmospheric Density Dependent Power Adjustment for Wind Turbines, of 28.02.2001, by Wobben Aloys, discloses a method to record or detect air density data and to control the electrical generator in function of these data.

- WO 2006/007696 A1, Wind energy extraction system, of 16.03.2005, by Tocher Angus, discloses a wind energy extraction device using concentrator wings around the impeller blades and a flow regulator used to enhance laminar flow between the concentrator wings.

- WO 02/057625 A1, A wind driven electrical power generating device, of 17.01.2001, by Smith, J.C. describes a wind turbine which including its complete generation and support structure has 360° of freedom of movement in the horizontal plane and where a vortex generator contributes to increasing the speed of the air flow and consequently to increase the power output of the wind plant.

**Prior art Darrieus wind generator type turbines are represented by:**

- WO 2004/027259 A1, Windmill for Wind Power Generation, of 20.09.2002 by Noguchi, Tsuneo, presents a Darrieus variant of a vertical axis type windmill claimed to be able to start and rotate in low-speed wind conditions thanks to airfoil shaped blades with a low Reynolds number and a notch on the rear edge of the blade.
- DE 33 03 898 C2, Verfahren zur Windenergienutzung, sowie dazugehörige

Vorrichtung, of 05.02.1983, by Prof. Dr. Tepe, Walter, discloses an improved vertical axis Darrieus type windmill combined with Savonius type blades, the improvement being directed towards an increase in potential use of wind energy through the combination of the acceleration of the wind generated air flow and the resulting under-pressure within the cylindrical flow path.

**Prior art Savonius type wind generator type turbines are represented by:**

- WO 2006/046337 A1, Windmill, of 29.10.2004 by Okuno, Shozo, discloses an improved Savonius type windmill. The improvement is reached by fitting the blades with a large number of spherical embossed features. These embossed features result in recesses on the wind receiving side and protrusions on the rear side and hence in reducing the starting wind-speed and the turbulent flow on the back of the blades.

- WO 03/019006 A1, Windmill (Variants) of 25.07.2001, by Poleacov, Mihail and Poleacova, Nina, introduces a vertical axis windmill with at least 2 bow-shaped, twisted turbine impellers. The invention relies on the construction of the impellers, be it with overlapping larger sides, be it with dissectors fixed on the convex side of the impellers to distribute wind impact in a more uniform way and provide for a more stable energy generation under extreme conditions.

- WO 2006/063380, Vertical Axis Wind Turbine with Twisted Blade or Auxiliary Blade, of 20.20.2004 discloses an improved vertical axis wind turbine comprising an auxiliary small blades preceding the main blades and defining a venture gap between both blades increasing the zone of radial wind impact.

- WO 03/027497 A1, Three-Bladed Vertical wind Mill Equipment, of 25.09.2001, by Kaneda Fumiro, shows an improved vertical axis generator by determining precise geometrical parameters between the inner and outer geometric dimensions of the blades.

- WO 2005/108783 A1, Vertical Axis Turbine Rotor Having Three Blades, of 11.05.2004, by Miljejevic Tanasije, describes an improved Savonius type with at least double stage, superposed turbines with 3 blades each for a wind generator.

**Electrical specificities of the Savonius type of wind turbines are treated by:**

- US 2003/0209912 A1, Wind Power Electrical Generating System, of 07.05.2002, by Badger Randall discloses an electrical generator system for a Savonius type wind turbine, consisting of a Savonius type rotating wind turbine fitted with a central armature of windings and an opposing plurality of permanent magnets. The resulting alternating current (AC) is converted to direct current (DC) via rectifiers and compensated for varying wind speeds by an automatic voltage adjustment circuit.
For low speed wind generators, a dual Savonius type turbine is provided, where the second system is specifically designed to accommodate apparently very low wind velocity in the order of 1 to 2 knots per hour which translates into more or less a starting wind speed of ~0.5 m/s.

**Other vertical, horizontal or transversal wind generator type generators are represented by:**

- US 4,857,753, Wind Energy Converter, of 03.11.1087, by Mewburn-Crook Anthony J.S. introduces a circular turbine in a vertical axis wind generator with a venturi effect, responding to wind coming from any direction and being capable of self-starting.

- WO 02/053908 A1, Vertical Axis Wind Turbine, of 05.01.2001, by Nikitins Leonids et al, discloses a vertical axis rotary wind motor including two symmetrically arranged blocks of elements with cascaded blades having subsonic aerodynamic profiles with the objective of improving the starting speed of the turbine.

- WO 2006/096091 A1, Wind plant, of 24.01.2006 by Tretyakov, Vitaliy Evgenievich discloses a body serving as air guiding device, a working wheel with a three-dimensional blade grid with a air outlet and a stabilizer, all being constituted as a complete device on a vertical shaft.

- WO 98/07981, Wind Turbine With Low Vertical Axis, of 23.08.1996, by Gual, Georges describes a flat-shaped ring like turbine with 2 concentric blade rows, the outer one catching the wind from any horizontal direction and transmitting it to the inner one which is the real turbine. The central shaft can serve to drive a generator or a pump.

- F 05 08054, Dispositif Éolien, of 28.07.05, by Gual, Georges Jean, describes a similar configuration where one of the concentric rows of blades is fixed and the other one is rotating and where at least some of the rotating blades are concave.

- WO 2007/007103, Roof Tile, of 13.07.2005 by Little, Malcolm Harcourt introduces a roof tiling system incorporating vertical wind turbines, each tile having an internal void to locate the turbine and apertures to allow wind access to said turbine.

- F 2 888 292, Turbine éolienne: Appareil mu par le vent pour la production d'énergie électrique, of 11.07.2005, by Guivarch, Daniel Jean-Paul et al discloses a vertical axis wind turbine mounted at an angle of 45° with regards to the base plane of the turbine.

- F 04 12262, Éolienne à axe vertical, of 18.11.2007 by Burlot, Alain discloses a vertical axis wind generator with at least 2 blades that are directly connected to said axis at their lower extremities and that are connected at their upper extremities to the same axis by a fixed lever under various configurations.

- DE 9314187 U1, Windkraftmaschine zur Anordnung auf Gebäuden, of 16.09.1993, by Mc Mahan Joachim; DE 199 19 133 A1, Dachwindanlage of 27.04.1999, by Thurner, Walter and US 5,394,016, Solar and Wind Energy Generating System for a High Rise Building of 12.05.1994, by Hickey, J. John, WO 2006/059062 A1, Wind Energy Conversion Apparatus into Building, of 02.12.2004 by Jackson, Raymond Keith and DE 2914957 A1, Windrad-Anlage, of 12.04.1979, by Illig Rolf-Herbert and DE 19644890 A1, Roof-mounted wind-energy conversion system, of 29.10.1996, by Huber Ralf disclose all disclose some sort of a transversal wind generating system, rotating around a longitudinal axis, introduced into a building, requiring quite substantial modifications of a building structure using these systems.

- In the case of US 5,394,016, solar energy is used additionally by making the wind generator vanes transparent and capturing the sunlight through these transparent vanes and thus "forming a combined solar and wind generator".

- WO 2004/063564 A1, A Wind Energy Conversion Apparatus, of 15.01.2003, by Van De Klippe Frederikus discloses another transversal wind generator but on a vertical column, which resolves the problem of increasing the wind-capturing surface by providing additional ellipsoidal wind capturing surfaces in its rotating blades, which are flexible with regards to the centrifugal forces during rotation.

- WO 2006/050711 A1, Rotor for transforming free flows in flow devices, of 13.19.2004, by Mahler Roland, discloses a water mill like system with a particular impending angle of the wind swept lamella.

- US 2002/0109358 A1, Omni-Directional Vertical Axis Wind Turbine, of 12.02.2001, by Roberts, Gary D. discloses a vertical axis wind turbine working in any wind direction. The arrangement maximizes energy production by increasing wind velocity and pressure on the blades and eliminating backpressure. This is achieved through dimensional characteristics of the key turbine elements.

- FR 2801937 A1, Wind driven rotor with vertical axis of rotation for electricity generation has semi-cylindrical vanes with cut-away leading and trailing edges, of 12.06.1999, by Ruffieux, Léon describes a vertical axis wind turbine with essentially semi-cylindrical vanes with a special cut geometry on the wind entry and exit flank of each vane.

- WO 02/14698 A1, Wind Power Station having a Chimney Effect, of 16.08.2000, by Jenner, Herbert, relates to a wind power station using wind flow machines coupled to generators and being placed into hot air streams to generate electricity.

- WO 2006/053356, Fly Wheel for Wind Turbines, of 08.11.2005, by discloses a liquid filled flywheel for wind turbines. It is characterized by the fact that the flywheel has openings so that the liquid fulfilling the flywheel function by mobile from the centre to the extremities of the flywheel can be rainwater.

- WO 03/083294 A1, Wind plant consisting of a vertical rotational axis and a control element system discloses control elements represented by flaps on the wind channelling housing that can be opened or closed in order to control the amount of active wind force acting on the blades.

- -US 4,047,834, Horizontal Multidirectional Turbine Windmill, of 18.12.1975, by Magoveny, George S. et al, actually seems to disclose a vertical axis wind turbine with a fixed housing within which the wind turbine turns, characterized by frustoconical surfaces defining tapered funnels accelerating the wind stream passing in between these surfaces and hence increasing the efficiency of the turbine.

- WO 01/61187 A1, Wind Energy Converter, of 17.02 2000, by Blum Albert, relates to the disclosure of a wind generator mounted on a body, specifically a building, around which an air stream flows. The wind generator comprises at least one wind wheel element, which partially projects into the area of the building where there is airflow and partially into the area, which is sheltered from the flow.

- WO 2006/050711 A1 of 13.11.2004, Rotor for transforming free flows in flow devices, of 13.11.2004, by Mahler Roland, relates to a wind turbine wheel where the impingement surfaces of the wheel are provided with exit openings and lamellae with a particular angle of attack joining the impingement surfaces such that the cross-section of the impinging air flow is greater than the diameter of the one corresponding to the turbine rotating element.

- US 5,269,647, Wind-Powered Rotor, of 24.05.1989, by Moser Josef, discloses a vertical wind power generator having radial arms distributed at uniform angles over its periphery. The arrangement is such that one side of the aerodynamic profile exhibits a lower air resistance to airflow at right angles than with airflow from the opposite side.

- F 2 861 140, Hélice à axe vertical et à deux pales oscillantes pour capter l'energie éolienne ou hydraulique, of 17.10.2003 by Barbati Silvio, discloses a vertical axis, propeller-like wind - energy captor with deflectors resulting in the elimination of the classical wind direction blade to position itself correctly into the wind.

- US 6,582,291 B2, Windjet Turbine, of 06.06.2002 by Thomas Clark, discloses a straight shaped vane turbine, which is produced as a complete module or set of modules by commonly known plastic moulding or extruding techniques.

- US 7,132,760 B2, Wind Turbine Device, of 07.12,2006, by Becker, S. William discloses a wind turbine that can be mounted in a vertical, horizontal or other aligned operational position.

- US 2007/0284885 A1, Wind Generator System, of 05.06.2007, by Pamela A. Menges discloses a wind generator comprising a drive shaft, a plurality of blades attached to that shaft, a generator assembly, a housing having a motorized wind directional apparatus and sensing means for wind speed and direction.

**Electrical specificities of various types of wind turbines are treated by:**

- GB 2 432 889 A, A vertical axis wind generator, of 02.12.2005, by Mendez Ivan discloses the vertical axis rotor of a wind-powered generator. It features a number of vertical axis wind turbine embodiments. As disclosed, the wind turbine drives the armature or the rotor assembly on the rotor shaft including iron core and windings, slip rings and brushes of an AC type variable speed, air-cooled generator which transmits the energy derived from the wind to the magnetic stator. Since the chosen turbine types are "up-wind", the air stream acting on the turbine blades is filtered via a removable and cleanable filter. This of course reduces the efficiency of the air uptake by the turbine. This document shows the integration of an AC generator into the interior volume of the wind turbine, but is silent about integrating other functionalities like accommodating different generator types, compensating for various wind speeds and including additional or synergistic energy sources.

- US 2003/0175109 A1, Fluid Driven Vacuum Enhanced Generator, of 18.03.2002, by Brock Gerald E. et al discloses a fluid driven multi-blade turbine, made at least partially of transparent material, where wind energy is present in front of and within a cowling, where said wind energy is directed towards the tangential portions of the turbine blades and where a vacuum is created downstream of the exit of the turbine. In the preferred embodiment a magnet rotates around a counter-rotating coil in a well-known manner. These directions can be inversed, as long as they remain opposite to each other. Spring biased and air motion sensor controlled valves, direct line or telemetric help to adjust intake and exhaust air depending on wind speed. Hall effect or motion sensors serve as a rotation counter used in the control scheme, which is expanded by sophisticated control methods, in order to optimize the use of wind energy. Again, this document shows the integration of an AC generator into the interior volume of the wind turbine, where the magnet is caused to rotate around a counter-rotating coil.
But the document is silent about integrating other functionalities like accommodating different generator types, compensating for low energy wind speeds and including additional or synergistic energy sources.

- US 6,249,058 B1, Wind Driven Generator Having Counter-Rotating Armature and Rotor, of 03.12.1999, by Monte Rea L. discloses a system where the rotating part of the wind turbine, moved by wind collectors comprises magnets which transmit the energy resulting from the wind induced rotation to the coil windings contained in the armature, supported by bearings.
This document shows the integration of an AC generator into the interior volume of the wind turbine, where the magnet is caused to rotate around coil windings. But the document is silent about integrating other functionalities like accommodating different generator types, compensating for various wind speeds and including additional or synergistic energy sources.

- WO 2005/075822 A1, Wind Turbine Comprising Driving Gear that is integrated into the Generator, of 04.02.2004, by Brach, Karsten et al shows a compact large-scale unit, also suitable for off-shore applications, integrating the driving gear into the generator.

- WO 2005/076445, Decentralized Power Generation System, of 09.01.2004 by Wendt Matthias et al shows a decentralized DC power generation system consisting of sub-units assembled within a high security network.

Reflecting now on the various types of wind turbines, Horizontal, Savonius, Darrieus and their transversal variants some principles become clear. Especially if we consider that the efficiency of each device depends on the cube of wind speed, the volume and mass of these engines in relation to the effective area swept by the wind appears crucial. Obviously a large volume with a large swept area would be theoretically efficient in large-scale vertical devices, as seen in the "Statéolien" device (- F 05 08054, Dispositif Éolien, of 28.07.05, by Gual, Georges Jean) mentioned above, but the weight of such larger devices becomes the problem for roof-mounted primary or retrofitted systems, for the prevailing lower wind speeds as well as for systems embarked on mobile units. Aerodynamically optimized spherical systems can be far lighter and more efficient at lower wind speeds which anyway are prevailing statistically.
In the following examples now the known features and characteristics from prior art hybrid systems will be analyzed with regards to their pertinence to the present invention.

**Hybrid solar-wind applications and other co-generation systems are treated by:**

- EP 1 045 987 B1, Rain, Wind, Wave, and Solar Energy 4-IN-1 Electric Energy Generating Installation, of 28.09.1998 by Ha, Siu Kwong et al describes a four-in-one system, where the generation of electrical energy will not be suspended, even if 1, 2 or 3 of the 4 natural resources fail to supply energy. It is planted into the seabed, consists of concentric wind- and water wheels, solar plates used also to collect raindrops and uses waves from the sea. If used on land, still 3 of the 4 natural energies remain.

- US 2006/0010867 A1, Individual Co-generation Plant, of 19.07.2004 by Shaw, Peter Alexander discloses an individual co-generation plant which uses the heat generated from a thermal solar collector to generate steam in a natural gas fired boiler system. The steam is used by a turbine/generator set to generate electricity. Excess electricity is either sold to the main power grid or used to generate hydrogen gas to be stored for future use. The co-generation plant has its own control system.

- US 7,124,586 B2, Individual Co-generation Plant and Local Network, of 21.03.2003, by Guy Negre et al, describes a co-generation plant and a network of such plants based on compressor/alternator units and a heating system to heat the compressed air. The plant has its own power management system and can be networked with other plants.

- EP 1 628 093 A2, Air conditioning system combined with an electricity generating system, of 17.08.2004 by Kang Seung Tak et al discloses a co-generation system with a combustion engine driving a generator for a cooling/heating unit including a heat pump and maximizing the use of engine waste heat.

- US 4,779, 006, Hybrid Solar-Wind Energy Conversion System, of 24.06.1987 by Melvin Wortham discloses a system for producing electrical energy from mobile air through a partially buried stack system and where the upper end of the stack is heated by solar power.

- US 4,462,213, Solar-wind energy Conversion System, of 16.10.1981 by Arlin.C. Lewis discloses a combined solar-wind energy conversion system in which solar and wind energy are used to make water rise from a lower level reservoir to a higher level reservoir and which uses that water among other functions to drive an electrical generator.

- US 6'674, 263 B2, Control System for a Renewable Energy System, of 05.06.2002 by Kodjo Agbossou et al discloses a stand-alone system for remote areas consisting of a renewable energy source providing unit, a DC bus and converter system, a hydrogen energy fuel cell conversion system and a monitoring system.
The renewable energy source-providing unit is either a wind turbine or a photovoltaic array solar converter. The hydrogen fuel cell compensates the demand in electric power between power needed on the load side and power supplied by the renewable energy source. The system controls the generation of electricity from the hydrogen fuel cell based on a desired level of available buffer energy and an expected or available contribution from the renewable energy source.

- Other documents relating attempts to organize the parallel use of renewable energies are WO 99/02856, WO 03/016716 A1, WO 2007/001154 A1, WO 2004/109099 A1, WO 2006/108264 A1, WO 2005/100878 A1, WO 2006/060761 A1, WO 2005/100783 A1, WO 2005/047101 A1, WO 2007/025387 A1, WO 03/087571 A2, WO 2006/066502 A1, WO 2007/066207 A2, US 6,016,015 and WO 2003/03813 A1.

- Modern building technologies contribute greatly to the generalized development and the use of renewable energy technologies and methods. One example is EP 1 731 846 A1, Einrichtung zur Belüftung und Beheizung von Gebäuden, 06.09.2005 by Christof Drexel, which teaches heating and airing of housing units, specifically energy efficient housing units, the so-called "passive houses". As may be expected, the document shows the use of ventilators, heat pumps, floor heating and the like, but it remains silent about the potential synergistic use of solar and wind energy to achieve further innovative objectives of the "passive house". But the document remains silent about using synergistic, not just parallel methods to employ 2 or more renewable energy forms to create an "active house", one that renders excess energy produced by itself to the community grid, for example by using wind power in the ventilation system. As could be imagined though by the person skilled in the art, thermal solar collectors, heat-pumps and fuel cells may be obvious candidates for such synergistic systems, especially since the potential synergy between these different systems is evident but not exploited simply for lack of inventive solutions. Such novel synergistic local power supply systems should make a normal housing unit and some mobile units nearly or totally self-sufficient.

**Mobile applications, electric, hybrid electric cars and vehicle to grid systems are treated by:**

The energy path in vehicles powered by internal combustion engines may be more disastrous as the one powering homes. In the end, only 25% of the energy derived from gasoline is used for mobility and accessories, the rest is lost to friction, waste heat, air resistance, rolling resistance, wheel misalignment compared to the geometrically correct trajectory. Hence novel synergistic local, meaning "on-board" power supply systems for vehicles have become increasingly important and the development continues in the direction where a vehicle delivers excess power to the grid, the so-called V2G solutions, which works mostly at the parking lot. However a full tank of diesel fuel is relatively light and corresponds to approximately 600 kWh of energy reserve, something still hard to match at equal volume and weight by today's electrical energy storage solutions.

- JP 2004080914A, Electric Vehicle, of 19.08.2002 by Makino Yasuhiro et al discloses a solar mobile application.

- US 7,252,165 B1, Hybrid electric vehicle, of 24.02.2006 by Gruenwald et al discloses a hybrid fuel and electrical propulsion system with an electric energy storage system with super-capacitors, an electric bus and a power management system.

- US 2006/0272870, Hybrid electrical vehicle employing permanent magnetic type dynamo-electric machine, of 15.08.2006 by Yutaka Matsunobu et al discloses a hybrid electric drive constructed to provide a higher torque at reverse, low rotation and low vehicle speed.

- US 2007/0282495 A1, System and method for assessing vehicle to grid (V2G) integration, of 01.05.2007 by Willett Kempton et al shows a method for calculating power available from an electric vehicle to electric power market on the grid.

- US 2004/0062059 A1, Apparatus and method employing bi-directional converter for charging and/or supplying power, of 18.07.2003 by Bing Cheng et al discloses a switched bi-directional converter combining a DC/AC inverter and a DC/DC charger.

- JP 06237501 A, Electric vehicle and solar car utilizing wind power generation, of 04.09.1992 by Itsukiyuu Kenchikushi et al discloses an electric vehicle utilizing wind power received during parking and driving by connecting an AC generator to a rotary fan and supplying the resulting energy to the vehicle.

- JP 10184528 A, Wind power generation for electric vehicle, of 19.12.1996 by Sasaki Kingo describes a horizontal axis fan coupled to a generator for power generation and located in a front grill of a car or other places. Said fan and generator can also be arranged transversely.

- JP 2001221146 A, Propulsive wind power generation type electric vehicle, of 08.02.2000, by Fujiyoshi Nobuyuki discloses a horizontal axis fan-type impeller connected to a generator to feed electrical power to the battery. Said impeller and generator can be located in various parts of the car body.

- US 2004/0238237 A1, Centrifugal Force, wind power, electromagnetic energy electric vehicles, of 30.05.2003 by Yoshioki Tomoyasu discloses the method of enabling converting resistance resulting from the driving operation into accelerating force in driving a motor car. The document cites the exploitation of the centrifugal forces in the wheels resulting from the forward motion of cars.

- JP 05015006 A, Travelling wind energy converter, of 02.07.1991 by Himeno Kazuyuki discloses a method to agitate the air in a sealed box within a vehicle independently of the travelling direction of the vehicle by use of a rotary fan and specifically designed ducts.

- JP 2002176702 A, Energy-saving electric vehicle utilizing wind power and bottom plate used as a stopper and movable up and down by Tomoyasu Yoko et al discloses increasing the output of an electrical vehicle by mounting a propeller or a horizontal axis wind turbine into the driving force in order to drive the vehicle on soft ground. It also uses a bottom plate of the vehicle to minimize impact losses occurring when the car travels on soft ground.

- JP 10201008 A, Regenerative braking device for electric vehicle, of 13.01.1997 by Koga Hisamitsu, describes a regenerative braking process, method and system depending on the car speed and the distance to the curve and the radius of said curve supplied by a navigation system.

The publication "Drive Friendly" © by IEEE power & energy magazine, volume 6, number 1 Jan/Feb 2008, authored by Phatiphat Thounthong et al explores the issue of fuel cell/super-capacitor hybrid power sources for automotive power generation.

In general, the advances made and imminent in energy storage will greatly influence the field of local electrical power co-generation systems for single and networked fixed, nomad and mobile power consuming entities. The use of substantially spherical multi-blade wind turbines (SSMBWT) according to the invention appears not to be known in the industry, despite the fact that they offer aerodynamic advantages and can work in horizontal or vertical position as needed by the automotive design and aerodynamics.

Fig 1b summarizes schematically prior art applications of the use of wind and solar power generation in mobile automotive applications, and shows several known configurations such as solar panels on a car rooftop, a wind turbine on such, or a hybrid vehicle driven by a conventional heat combustion engine and a rechargeable battery.

**Objectives of the invention**

The principle objective of the present invention hence is to create a universal, local electrical power co-generation system, based on:

- a synergistic use of locally available ambient and derived energies and on
- the use of common energy streams around and within these co-existing sources of energy
- to constitute a synergistic electrical power generation system together with these and other energy sources.

In the following description of the invention, this objective is first embodied by a system for electrical power co-generation, which provides a novel, synergistic use of at least 2 sources of renewable energy, embodied by wind plus solar energy based co-generation system for a fixed user. Both energy converter units are optimized to extend their individual operational usefulness. They are further operated via an energy synergy management system in conjunction with an autonomous ambient sensing unit. This system puts the wind and solar energy converters in physical and electrical synergy with each other in order to achieve more net power output over time than what the sum of their normal individual outputs would be.

The electrical power co-generation system is configured to potentially cooperate with at least one additional captor or provider of locally available direct or indirect energy.

A further objective the present invention is to create a synergistic system, which overcomes the primary impediments to success of small-scale, distributed co-generation systems, like noise, aesthetics and integration into the architectural system and to innovate beyond that.

The next objective as expressed by the first embodiments of the invention relates to creating an affordable, ubiquitous base for wide scale distributed co-generation.

A further objective and a further embodiment of the invention is to be able additionally to dispatch individual surplus power to the grid or other users in a multiple user configuration.

A further objective of the present invention is to provide an energy synergy management system for the distributed co-generation system that can help the user learn about the power generation/consumption patterns in his/her house and manage and optimize the synergy between the installed sources of electrical power co-generation.

The same objective applies for co-users in a multi-entity dwelling on how to intelligently exchange surpluses of individual internally generated energy among networked co-generation units.

The same objective applies for providing information to the grid operator and the general public via the same energy synergy management system, which in this way closes the synergy loop between the local user/co-producer of electrical energy and the grid supplier and large-scale producer.

A further objective of the present invention is to apply the synergistic co-generation system to mobile and nomad energy consumption units.

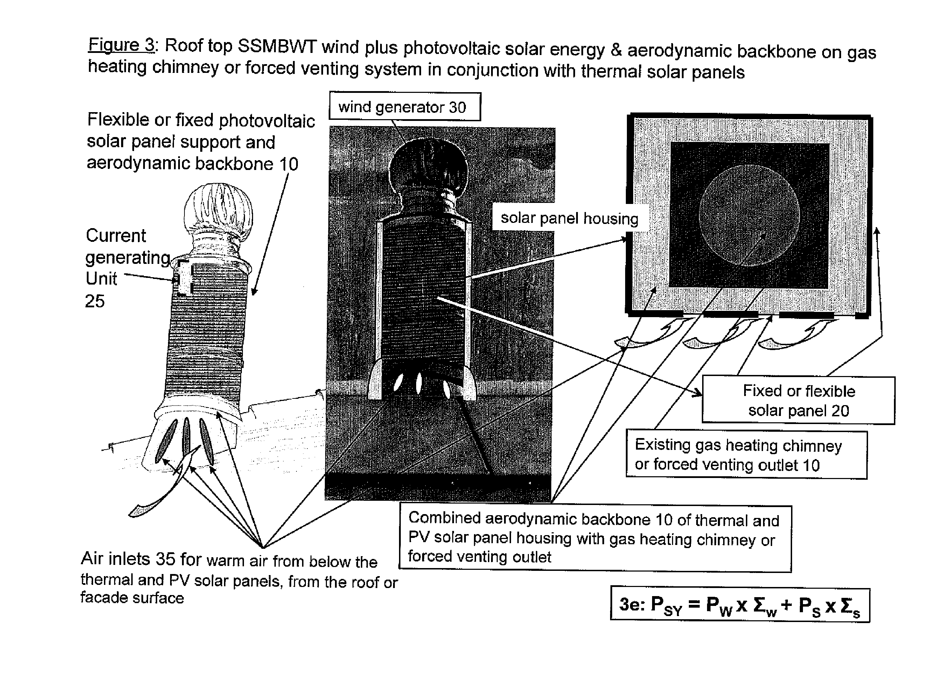

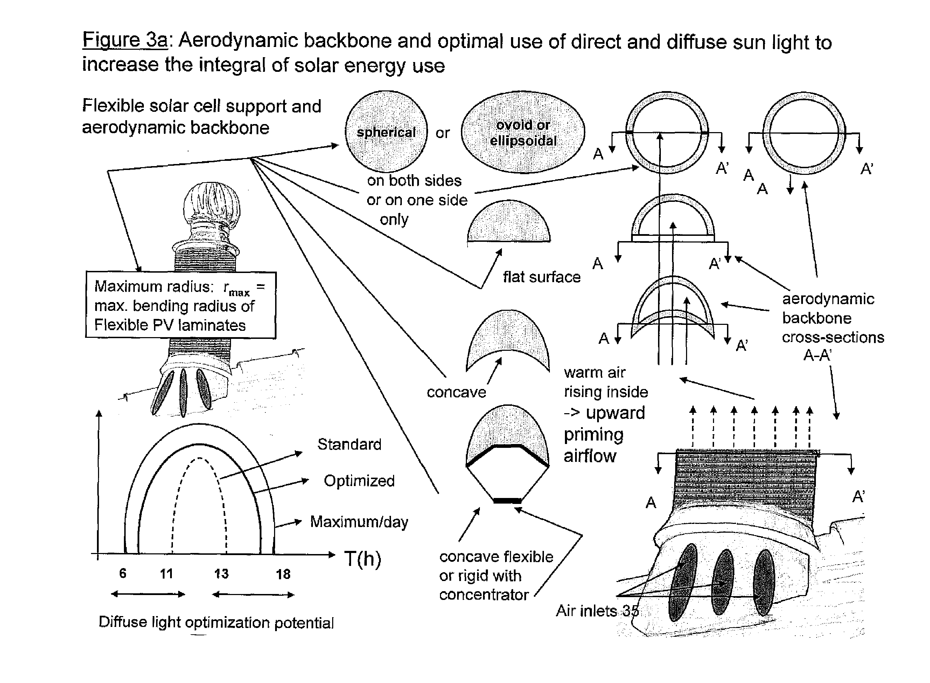

As is disclosed in Figure 3a, and as will be described in more detail further on, the inventive system makes optimized use of peak and of diffuse solar irradiation by its geometry and construction support and mostly of the aerodynamic backbone, in order to increase the light optimization efficiency by deriving and using synergy effects with the wind energy generator

As will be disclosed later, in particular embodiments, the inventive system also uses a self-contained ambient sensing unit and the self-sensing features of the solar converter to seamlessly, continuously position the flexible solar cell support backbone and to optimize the energy integral delivered according to the position of the sun.

This way it becomes independent of using recorded zenith positions according to the time of the day or the day of the year. This feature is highly effective, since the flexible foil substrate, polymer or metal, for amorphous silicon photovoltaic cells represent the lower cost technology and additionally is more efficient with diffuse light, as will be shown later.

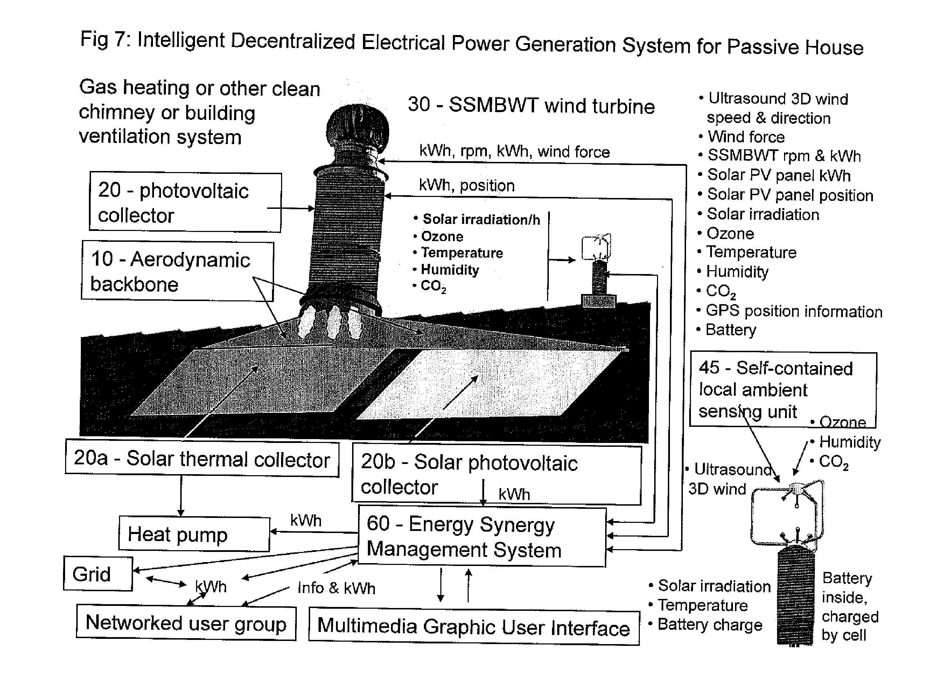

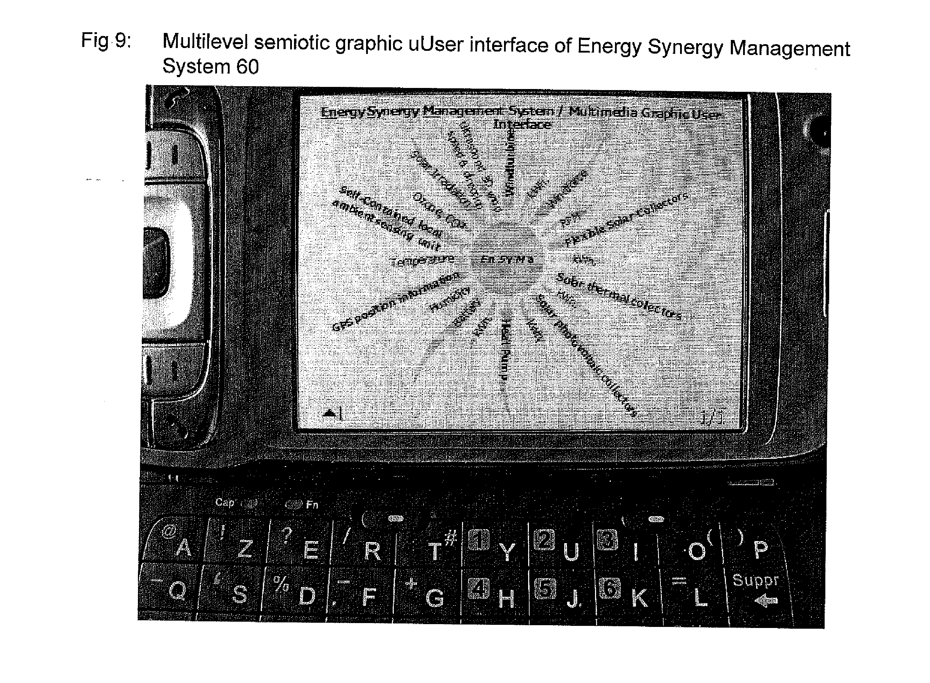

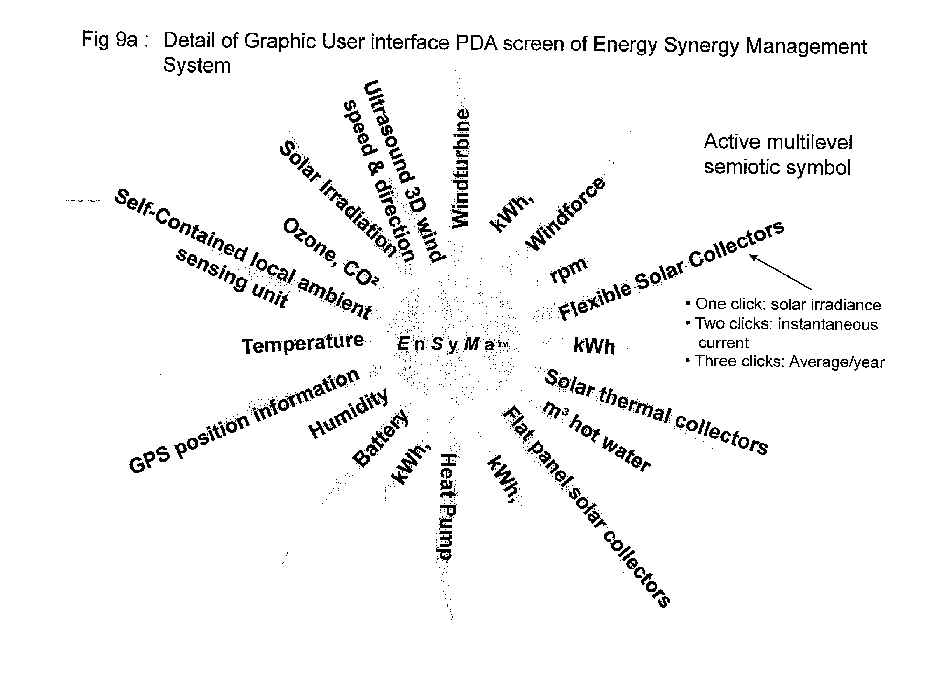

The term chosen by the inventor for the present disclosure is "Intelligent Decentralized Electrical Power Generation System" and the term chosen for the wind turbine according to the invention is "Substantially Spherical Multi-Blade Wind Turbine (SSMBWT)". These terms will be employed for the various system embodiments of the invention, be it vertically or horizontally, on top of a residential unit roof or of a business or high rise building, a mobile home, a truck, a bus, a camping van, a yacht, a cruise ship or an SUV such as described in the invention. The term "decentralized" or "local" will be tied to the terms of "close to the point of electrical energy consumption", meaning close to an "individual user" or "networked user groups". "Networked user groups" relates to a dwelling, neighbourhood or township where one or more than one "individual energy user" may be living, like in semi-detached houses, terrace- or town houses. "Networked user groups" may network to larger interest or energy producing groups using the communication features of the Energy Synergy Management System according to the present invention and shown in Figure 7, 9 and 9a.

"Synergistic Decentralized Power System" is proposed to be the term for "single or multiple ambient energy based decentralized energy generating systems", using a synergy effect like the aerodynamic backbone explained in the invention and being applied to systems managed by electronic ambient sensing and energy synergy management systems as per the invention.

To further the purpose of better understanding, the domain of "synergistic" co-operation of energy sources needs to be explained shortly.

The term "synergistic" in its etymologic sense from Greek **"sunergia",** with **"sun"** meaning "with" and **"ergon"** meaning "work", relates to the "co-operation" by more than one entity to achieve a function. In the case of the invention we refer to the synergistic cooperation of at least 2 of the various energy sources available at a particular point of electrical energy consumption for an optimal exploitation of their total available energy over time.

In the literature sometimes cited in this disclosure, the parallel use of wind and solar energy is sometimes related to as "synergistic systems" despite the fact that they simply refer to two systems merely working in parallel, i.e. not actually cooperating in the sense of the invention.

A first way to achieve such a sustainable co-generation solution would mean, at least partially, to first preserve energy by building "non-wasting" entities. Equally important, the second way would mean building housing and other fixed and mobile energy consuming entities that improve at least partially on energy consumption from non-ambient sources by preserving or using energy which is generated internally and received from or induced by the ambient.

A third way would be to increase the energy recuperation from available and renewed ambient energy sources. (Sun, wind, water, temperature differentials, pressure differentials, height differentials and the like elements, phenomena and their effects).

The fourth way, as a little recognized consequence of the first 3 ways, is creating distributed co-generation, at or close to the point of use, supplying part of or all the power needed for such individual, local energy consumption. In the end this way will result in an additive phenomenon, because not all the power produced will be needed all the time or at the same time everywhere. Energy storage will make sense because of the redistribution potential and transmission losses will be reduced dramatically. Indeed, long distance transmission amount to substantial losses, around 15 to 20 % of generated power.

The present invention addresses basically all four ways way of achieving sustainable -co-generation but relates mostly to the above issues 2 to 4 by significantly increasing ambient and local energy recuperation, allowing for distributed co-generation and reducing transmission losses.

Hence, the invention inscribes itself in the emerging universe of the efficient use of ambient, renewable and sustainable decentralized or distributed power co-generation. The surplus co-generated energy can be distributed into an electrical utility grid and remunerated under contractual conditions.

A "distributed grid" will result from multiple such local, decentralized power generation units, helping to move towards a society that will become weaned from the electrical plug and the gas pump. In short, by closely matching local supply and demand, the law of big numbers should prevail. This could come through if every such fixed or mobile power consuming entity were to co-generate at least a reasonable fraction of its own consumed energy.

Networked synergistic systems which were built on an "individual energy co-generators" using locally, on a small scale, at least 2 renewable energy for fixed and mobile applications as proposed by the present invention, do not seem to be to be known in prior art.

As far as electrical engineering terms used here and in many of the cited documents, the terms rotor and stator seem to be used indiscriminately for the rotating and static elements of a wind turbine and also for the rotating and static elements of the electrical generator.

Throughout this document however and for reasons of technical clarity and language used in electrical engineering, terms, "rotor" and "stator" will only refer to elements of an electrical generator or motor.

The rotating parts of the wind turbines will be called as such, like blades, vanes or according to the terminology applicable to their type, such as Savonius, Darrieus and others. The fixed elements of the wind turbines will be called as such, like housing, base, support or what the case may be. The paper "Small Wind Turbines in the Built Environment: Opportunities and Grid-Connection Issues" by Johan Driesen et al is an excellent point of reference for these increasingly popular but nevertheless little understood units. (Ref. 0-7803-9156-X/05/©IEEE)

The paper "Architecture Complexity and Energy Efficiency of Small Wind Turbines, by Mirecky Adam et al © IEEE Transactions on Industrial Electronics, Vol 54, N° 1, Feb 2007, addresses the problem of load dependency for vertical-axis wind turbines and introduces several control strategies involving AC/DC conversion, control strategies and architectures, including fuzzy logic algorithms to maintain the optimal operating point for a small vertical axis wind turbine. (VAWT)

As far as solar energy is concerned, photovoltaic elements, panels or cells which generate electrical power in its DC (Direct current) form exist as fixed and flexible "solar panels".

The invention is independent of the type of photovoltaic element used but favours using technologies which offer "the highest area under the curve" in terms of resulting energy over time for a given solar irradiation.

**Description of the invention including its industrial implementation.**

Now that the background of invention, the objectives of the invention and the state of prior art have been duly described, the invention of a synergistic, universal local electrical power co-generation system for single and networked fixed, nomad and mobile power consuming entities will be disclosed.

The present invention relates to a novel, small size system for intelligent, decentralized electrical power generation which uses at least 2 sources of ambient energy in a novel synergistic way and has a wide field of application. These sources of energy can be external or internal relative to a point of energy consumption. According to some of its embodiments, the system according to the invention is applicable to supplying a variety of fixed and mobile power consuming entities with partial, total and excess electrical power. At least a third source of energy may be added advantageously. As such the system can be used as an integral element of a distributed energy generation network or for remote, stand-alone applications.

Physically, the system consists firstly of at least one single or multiple converter of at least one natural ambient or derived source of energy existing at the point of use and being converted into electrical energy. Secondly, and more importantly it features a novel, constructive backbone exploring common energy streams of co-existing sources of ambient energy to constitute a synergistic electrical power generation system together with these and other energy sources. It further consists of a self-contained ambient sensing unit and of an energy synergy management system. The latter comprises a communication module, a networking module, a module for compiling patterns of energy supply and consumption as well as of real time local ambient conditions, a novel graphic user interface and an energy storage and transmission entity.

In a stand-alone configuration, the novel system allows to power small and large fixed power consuming units such as communication units, parking lots, car ports or garages, boats, tents and the like. In more elaborate configurations like a residence, it may allow the users to produce more than their electrical power consumption needs and to feed this excess power back to the grid operated by the electrical power generation utility or to share it with multiple users in a distributed co-generation network. The novel system also allows multiple users to network, to adapt, to learn about and benefit from electrical power co-generation derived from ambient energy sources and even to plan their individual consumption according to prevailing ambient conditions and resulting energy contribution.

Simple and multiple embodiments of the inventive system can also be used for mobile and nomad power consuming entities according to their size, like scooters, cars, trucks, boats, yachts or tankers, freighters, trains and the like.

The system according to the invention is further capable of transmitting a profile of the prevailing recent and recurring availability and performance patterns of at least 2 sources of energy for power co-generation at a defined GPS position via modern communication means such as GSM, GPRS and other handheld, mobile or fixed communication devices. Thus, in its network configuration, it can also communicate the prevailing recent and recurring energy generation and consumption pattern compared to accumulated and ad hoc knowledge of local and regional ambient conditions and user network configuration. Hence it allows for single and for grouped control of an intelligent, decentralized network of decentralized electrical power generators consisting of a number of intelligent systems as per the invention. This is achieved via a multi-layer and multimedia graphic user interface tied to the built-in logic and the communication capabilities of the energy synergy management system, which is simple to operate on the basis of universally or locally accepted symbols and concepts.

In the most preferred embodiment as disclosed in the present invention, the Universal Electrical Power Co-Generation System is described as consisting of:

1. At least one substantially spherical multi-blade wind turbine (SSMBWT) with individually enhanced interior and exterior blade surfaces, with at least a one stage frictional drive surface and one direct or indirect rotational speed sensor element

2. At least one current generating unit

3. At least one branch of an aerodynamic backbone consisting of a circular or otherwise shaped, hollow pylon supporting suitable gearing and fixtures for at least a first support unit for a flexible photovoltaic solar collector supporting at least one optimized flexible or flat photovoltaic solar collector unit in conjunction with at least a second support unit for a smart, electrical energy producing surface apparatus converting wind energy and at least one SSMBWT as the main wind energy converter, with its support and gearing elements and at least one electrical DC motor/generator and the supporting mounting structure suitable to the mounting surface,

4. A cylindrical or otherwise-shaped solar collector support unit fitted with a first surface element featuring said at least one flexible or rigid photovoltaic solar collector unit and with at least a second surface element featuring a smart material wind energy converter and uniquely constructed to function as an aerodynamic backbone for both wind and solar units and being constructed for electrical synergy and optimal output of both units,

5. at least one self-contained ambient sensing unit at least sensing solar irradiance, and wind direction as well as wind speed in x, y and z axis

6. an electronic energy synergy management system providing:

- information transmitted by the self-contained ambient sensing unit and the SSMBWT rotational speed sensing unit

- information concerning the GPS position of the system

- information provided by the photovoltaic solar energy and the smart material wind energy converters

- a graphic user and maintenance interface

- DC to AC power conversion and DC rechargeable battery control

- a data and operational interface to at least one further ambient or derived energy unit tied into the universal electrical power co-generation system

- a data and operational interface to at least one further individual electrical co-generation system

- a data and operational interface to a networked group of other distributed co-generation systems

- a data and operational interface to the general electrical power grid providing utility

7. a rechargeable energy storage unit controlled by said electronic energy synergy management system

The core of the invention is that, besides of being individually optimized, both ambient, wind and solar, power co-generating units

- operate in thermal, aerodynamic and physical synergy via a novel constructive arrangement

- operate in electrical synergy via an energy synergy management system and an autonomous ambient sensing unit

- can cooperate in synergistically controlled function with at least one additional ambient or derived energy unit tied into the universal electrical power co-generation system

- can cooperate in synergistically controlled function with at least one further individual electrical co-generation system

and that the resulting universal electrical power co-generation system can be:

- networked power-wise, information-wise and system control-wise into grouped distributed co-generation systems

- networked power-wise, information-wise and system control-wise to the general electrical power grid providing utility

- networked information-wise and system control-wise to provide a meteorological and energy generation mapping facility

and that the resulting system includes a multimedia multilevel semiotic graphic user interface.

Thus, the present invention concerns a hybrid electrical power generation system as defined in the appended claims.

Thanks to the features of the hybrid electrical power generation system according to the present invention, it is possible to generate "clean" energy in an effective, low-cost and efficient manner.

The novel electrical power co-generation system, its components and some embodiments are shown and explained now in the following figures:

Figure 1 illustrates a wind energy conversion & Betz' theory compared to real wind impact conditions and response of prior art wind turbines,

Figure 1a illustrates a prior art roof top wind turbine and solar collector,

Figure 1b illustrates a prior art mobile applications of wind turbine and solar collector energy generation,

Figure 2 shows an overview of Betz' theory compared to real wind impact conditions and response of substantially spherical multi-blade wind turbines (SSMBWT),

Figure 3 illustrates a rooftop SSMBWT wind plus photovoltaic solar energy & aerodynamic backbone according to the present invention on gas heating chimney or forced venting system in conjunction with thermal solar panels,

Figure 3a shows an aerodynamic backbone and optimal use of direct and diffuse sun light to increase the integral of solar energy use in an embodiment of the present invention,

Figure 4 shows embodiments of a roof top version of the SSMBWT for wind energy to electrical energy conversion,

Figure 4a shows an improved SSMBWT wind turbine embodiment,

Figure 4b shows a further improved SSMBWT wind turbine embodiment,

Figures 5a to 5c: illustrates variants of the wind turbine with standard or surface enhanced flexible or rigid PV solar panel mounted on SSMBWT and/or on the aerodynamic backbone,

Figure 5d shows a position controlled PV solar panel for increased integral of direct and diffused solar energy use,

Figure 6 shows an alternative arrangement of the roof top mounted SSMBWT turbine with a photovoltaic panel & aerodynamic backbone in synergy with solar, thermal and heat pump units,

Figure 7 illustrates an embodiment of the system according to the present invention by way of an intelligent Decentralized Electrical Power Generation System for

Passive Houses,

Figure 8 illustrates an embodiment of the system according to the present invention by way of an intelligent Decentralized Electrical Power Generation System for multiple housing & professional buildings using synergies,

Figure 8a illustrates an embodiment of the system according to the present invention by way of an intelligent Decentralized Electrical Power Generation System for multiple housing & professional buildings and flat rooftop variant,

Figure 9 shows an example of a multilevel semiotic graphic user interface for the Energy Synergy Management System according to the present invention,

Figure 9a shows more detail of the Graphic User interface of figure 9, on a PDA screen,

Figure 10 illustrates an embodiment of the system according to the present invention by way of an intelligent Decentralized Electrical Power Generation System for Fixed Applications,

Figure 11 illustrates an embodiment of the system according to the present invention by way of an intelligent Decentralized Electrical Power Generation System for Mobile Hybrid Plug-in, Electrical or V2G Applications, and

Figure 12 illustrates an embodiment of the system according to the present invention by way of an intelligent Decentralized Electrical Power Generation System for different Mobile Applications.

Coming now to the figures, we'll see step by step how the invention corresponds to the objectives set out and solves the problems left by the prior art. Further features and advantages will become obvious and the invention is not limited by the attached drawings or combinations thereof.

As mentioned previously, Figure 1 illustrates wind energy conversion & Betz' theory compared to real wind impact conditions and response of prior art wind turbines shows the difference between theory and reality. The theory according to Betz' law, stating the dependency of the power exerted by the wind on a particular surface is proportional to the swept surface and varies with the cube of the wind speed. It will be obvious to the person skilled in the art that this theory explains only a general approach. The equation

$$P_W = \tfrac{1}{2}\,\rho \times S \times V^3 \qquad\qquad (1)$$

leads to think that efficiency factors are needed to adapt to reality, firstly to describe the transmission of wind energy into mechanical energy.

These efficiency factors would apply to Betz' law as follows:

$$P_W = \tfrac{1}{2}\,\rho \times \underline{E_s} \times S \times \underline{E_v}\, V^3, \qquad\qquad (2)$$

where $\underline{E_s}$ corresponds to the efficiency of the surface transmission and $\underline{E_v}$
corresponds to the efficiency of the using the wind speed.

Regarding $\underline{E_s}$, it becomes obvious that the larger the surface, the larger the effect. When only small surfaces are available, such as on a roof or an automotive venting duct, the impact surface of the receptor becomes important. Obviously, substantially spherical multi-blade wind turbines as per a preferred embodiment of the invention respond to that requirement. This even more so by enhancing the geometrical turbine blades by the use of CFD (Computational Fluid Dynamics) simulation and by surface enhancing treatment like coating, stamping, sand-blasting and others.

Regarding $\underline{E_v}$, it shows that air evacuation is increased and air through flow resistance is reduced by the slightly helicoidal blade arrangement of the substantially spherical multi-blade construction. It also shows that functioning in a mostly perpendicular aspiration mode with regards to the wind direction will further facilitate air evacuation and substantially lower the wind speed needed to start a wind turbine of the same weight at the same wind speed.

Of course, as mentioned in the Figure, real wind impact is anisotropic, and varies continuously depending on the wind direction, its speed, the air density and the impact directions.

It is thus advantageous to allow for a wind generator design that may, at least partly, be adapted to these changes.

Coming to Fig 3 now, a preferred embodiment of a hybrid electrical power generation system 1 according to the present invention is shown. In general, the inventive system comprises a duct 10 constituting an aerodynamic backbone. This backbone comprises at least a wind generator 30 and a photovoltaic energy converter 20. Further, a current generating unit 25 is provided which is coupled to wind generator 30 and to photovoltaic energy converter 20. As such, both the wind generator and the photovoltaic energy converter may assist, in a cooperative manner, in generating electricity. According to the present invention, wind generator 30 is a vertical axis wind turbine (VAWT), and may preferably be a spherical multi-blade wind turbine (SSMBWT), as shown in this embodiment. Further, photovoltaic energy converter 20 is a solar panel positioned close to the duct.

This local electrical power co-generation system is constructed to function from the roof of a building. The duct is a synergy backbone consisting of the substantially cylindrical, tubular structure of the solar generator as shown in the Figure and serves 2 functions. First it is part of the physical support units for both the wind energy based and the solar energy based generators and ancillary equipment. Secondly, this tubular support structure, i.e. the duct, feeds air into the spherical multi-blade wind turbine (SSMBWT).

In fact, duct 10 may be an existing duct, such as a chimney duct or a forced-venting outlet, such as from an air-conditioning system, on which wind generator 30 is mounted.

Duct 10 may also comprise air inlets 35, which may be arranged at the lower part of duct 10, as shown in Figure 3a, to allow for local warm air to enter the duct for feeding the wind generator Such local warm air may stem from below the solar panels, from general thermal panels on buildings, from the roof itself (such as sun heat-induced), or simply from the building's façade surface. I

In a most preferred embodiment, wind turbine 30 is a substantially spherical wind turbine of the aspirating type, meaning that by rotating it generates an under-pressure in the duct below it.

As shown in this figure 3, solar panel 20 may be mounted on duct 10 by surrounding it. To this effect, preferably a flexible solar material is used, such as for surrounding a circular duct, although it is of course also possible to use a fixed solar panel, more suitable for surrounding a rectangular duct, as shown. Clearly, such arrangement substantially reduces the orientation problems of conventional solar panels with respect to received sun radiation.

As also shown in Fig 3a, the portion of the aerodynamic synergy backbone on which the solar panel is mounted according to the invention is of a concave construction, allowing to optimize the efficiency of the flexible solar cell by increasing its response to diffuse light which is now additionally reflected due to this concave surface portion on which the flexible cell is mounted. A similar effect can be reached by using several rigid solar cells along a substantially concave, angled surface.

Figure 3e thus shows the aerodynamic backbone and its optimal use of direct and diffuse sun light to increase the integral of solar energy used in an embodiment of the present invention. As is shown, the inventive system makes optimized use of peak and of diffuse solar irradiation by its geometry and construction support and mostly of the aerodynamic backbone, in order to increase the light optimization efficiency by deriving and using synergy effects with the wind energy generator. The duct, or backbone 10 may have different shapes depending on intended exposure to sunlight, and could thus have different cross-sections, such as circular, ellipsoidal. It may be round, semi-circular with a flat section, concave etc. As shown in the Figure, the sun radiation varies with the time of day. B selecting a suitable shape of the duct 10, and by covering such with suitable solar panels, an optimised radiation impact may be obtained. The solar panels may thus cover all or part of the duct, and should of course be applied depending on the maximum bending radius to ensure correct functioning.

In a similar manner, wind generator 30 may also have different shapes, and use different material in order to optimise its operation.

As shown in Figure 4, a roof top-mounted substantially spherical VAWT may be used having a diameter of for example from 40 cm to 1.5 m. Such SSVAWT is known as such and is generally used on chimneys to improve fume extraction, see for example the document EP 0 950 857, but this device is not a wind generator. This SSVAWT has multiple blades and is generally referred to as a substantially spherical multi-blade wind turbine (SSMBWT) but requires heavy adaptation if to be used in the present invention as a wind generator.

According to the present invention, wind generator 30 is connected to current generating unit 25 in a suitable manner so as to transfer the energy that is generated when the wind generator starts rotating. Such connection may be by way of a friction transmission element, such as a low-friction gearing, or may use an electromagnetic transmission, such as a rotor/stator arrangement or the like, and is in principle well known to a skilled person.

As also shown in Fig 4, the current generating function can also be taken over by a separate DC motor 25 which may be mounted on the same axis as the DC drive. In this further advanced embodiment it also becomes possible to use some of the electrical power delivered by the photovoltaic converter 20 to maintain the wind generator 30 at optimal speed. For example, if the wind generator, here a spherical wind turbine 30 turns at 60 rpm at a wind speed of 3 m/s, the DC drive 25 may turn at 3000 rpm, which may be its most efficient speed. If the wind falls below 3m/s but not sufficiently low to make the spherical wind turbine stop, the additional DC motor 25 powered by the photovoltaic converter 20 or the energy storage unit 70 via the energy synergy management system 60, compensates to bring the DC drive to its optimal speed, for example 3000 rpm. Conversely, at higher wind speeds which are however not dangerous, but allow for an interesting power generation level, the additional DC motor 25 powered by the photovoltaic converter 20, via the energy synergy management system 60 may be used to slow down the DC drive 25 to optimal speed and with it the wind turbine 30.

The person skilled in the art will know that such a system may feature overload security and disconnect elements for excessive wind speeds.

Advantageously, according to the invention and as shown in Fig 4a1, the outside surfaces of the blades of the substantially spherical multi-blade wind turbine (SSMBWT) are produced in a way to offer a larger surface to the wind than given by their simple geometrical dimension. In fact, these blades are designed to receive on the inside and the outside a surface treatment, like a surface enhancement and surface increasing production step. In this manner, these blades further lower the starting torque and consequently the starting wind speed of the already very efficient spherical multi-blade wind turbine.

Figure 4a2 shows a variant where one or more electric current generators (here in this example DC motors) are fitted to the hybrid electrical power generating system according to the present invention. As shown, one, tow, or three, or more, motors can be provided, depending on the actual power generated by wind. As such, the power generation is load adaptable to effective wind power.

Figure 4a3 shows in more detail the principle of the duct 10 have air-inlets allowing warm air to rise inside the duct, i.e. inside the aerodynamic backbone. Thanks to this warm priming airflow, the wind turbine may already start rotating, so that a lower starting rpm may be arrived at.

Figure 4a4 shows an example where priming is further improved by supplying current generated by the solar cell at certain sub-efficient winds speeds. Again, the initial friction that needs to be overcome to start the turbine rotating can be reduced by the priming in this manner, thus allowing for a rotation at lower wind speeds. Once the turbine rotates, less wind is needed to maintain the rotation than is needed to allow for rotation.

Additionally and as shown in Fig 4b, the present wind generator 30, in this example the substantially spherical multi-blade wind turbine is fitted on its top part with multiple sail-like structures 36 which offer additional surfaces to the air exiting the turbine vanes at high speed close to that top part. In a further embodiment of the invention and as also shown in Figure 4b, at least one second, substantially spherical or cut-of spherical wind turbine 38 can be mounted closely above the top of the first wind turbine 30 and on the same axis. It may not always be in a fixed connection mode with said axis as the first wind turbine 30. It may turn freely until it reaches a certain speed as of which it may be connected directly on the axis. Second substantially spherical or cut-of spherical wind turbine 38 hence serves a special function. This function is, partially similar to above, to increase the energy generating efficiency of the first wind turbine 30 by assisting to overcome the starting torque at lower wind speeds, and to turn faster and longer. Compared to the sail-like structures 36, this solution offers the potential to generate even a higher integral power. This may be done by using a torque converter type clutch system to make the first wind turbine 30 start earlier than it would normally do. For example, an internal gearing and a very low-friction bearing may be used to drive the rotation axis of the wind generator 30 that is coupled to the DC drive motor. As may be understood readily, in this manner, the initial inertia may be more easily overcome.

Both the sail-like structures 36 and the second, smaller substantially spherical or cut-of spherical wind turbine 38 according to these embodiments shown in Fig 4b serve to increase the efficiency of the first wind turbine 30 by making it turn earlier and longer as will be explained further on. The advantage of such a system differentiation is that the design of the substantially spherical or cut-of spherical wind turbine can be optimized according to the local wind conditions.

This substantially spherical wind turbine 30 is preferably of the aspirating type, meaning that by turning it generates an under-pressure in the ducting below it. The substantially spherical construction makes the wind turbine turn at very low wind speeds of ~ 1 to 2 m/s, makes it very solid and independent of the wind direction, insensitive to wind gusts and able to withstand very high wind speeds according to the density of its vanes 37. According to the invention, the multiple sail-like structures 36 offer additional surfaces to the air exiting the turbine vanes at high speeds close to that top part. Also according to the invention, the already large surface of the wind turbine that is exposed to the impact of the wind is further increased. This increase of the wind impact active surface is achieved through surface treatment like embossing, pressing or laminating or other surface increasing techniques. As has been explained above and approximated on the basis of the cited Betz type of efficiency equation, the total surface swept by the wind has a linear influence on the amount of energy that can be extracted from the wind, hence on the efficiency of the wind generator.

The substantially spherical wind turbine 30 is supported on a central axis 31 and turns in a low friction bearing 32, see Figure 4b.

It is mounted on a concentric structure acting as the aerodynamic backbone 10 which itself is generally mounted on a sloped or vertical roof of a building and which also supports the aerodynamic backbone 10. The wind-turbine 30 is fed with rising air from below coming from the aerodynamic backbone 10.

As mentioned above, the spherical body of the wind turbine can be fitted with a second substantially spherical, smaller but otherwise largely identical wind turbine 38. This second, smaller wind turbine is constructed to turn on the same central axis 31 but initially independently from the main wind turbine 30. Only as of a certain turning speed expressed in rpm (revolutions per minute) will it be engaged by a suitable mechanism to turn on the same central axis as the main wind turbine in a solidly coupled manner. The smaller wind turbine 38 hence acts as a wind actuated starter device for the main wind turbine 30, this earlier and at lower wind speeds than it would start by itself. It also allow main wind turbine 30 turn faster and longer than it would do by itself.

The engaging action that provokes the starting of the main turbine is controlled by the energy synergy management system 60, based on wind speed and rpm measurements.

At least the outer surface including the vanes 37 may be made of laminated photovoltaic material, which represents the optimum of synergy because the device generates electricity at best from the combined ambient solar and wind energies. The combined electrical power thus generated is fed into the energy synergy management system 60 for transformation and storage.

At least parts the inner surface of the body of the wind turbine 30 may be coated with a layer of electro-active material which generates electricity from the expansions and contractions resulting from temperature changes and wind impact. Smart materials like PVDF for example are suitable for these applications. The electrical power thus generated is fed into the energy synergy management system 60 for transformation and storage.

The body of the wind turbine can basically be made from a square or rectangular sheet of material into which the vanes 37 may be cut, leaving a circular uncut area in the centre. It can also be made of high strength woven material featuring a large external surface. The vanes may then be bent into the spherical shape and their lower ends may be joined to a circular structure to maintain the substantially spherical shape. The multiple sail-like structures 36 may be screwed on a circular uncut area in the centre through which the central axis supporting the wind turbine passes. They are normally made out of aluminium with a surface increasing technique.

As shown in Fig 4b and in case of the invention, the lower circular structure is constituted by a gearwheel that may transmit its rotation to the gearwheel 32 of the DC drive 25, directly or via a belt, from the interior or exterior diameter of this circular structure.

For a diameter of less than 50 cm at its lower cut-off base, a spherical wind turbine 30 according to the invention can generate about 1 to 3 kW at normal wind speeds. Wind turbines of around 1 meter in diameter are still of a reasonable size for roof mounting and may be capable of generating in excess of 5 kW at normal wind speeds. According to the invention, using more than one DC drive but smaller drives is thought be superior in overall performance compared to employing a single larger one. Same as described before in the case of preferring a photovoltaic energy converter 20 that is more efficient with diffuse light, the invention concentrates on decreasing the starting speed and torque needed to make the substantially spherical wind turbine turn at effective speeds. Conversely, the DC drive which needs to be turned by the wind turbine 30 imposes a certain starting torque according to its size.

Hence in a particular preferable embodiment, 2 or more smaller DC drives 25a, 25b, 25c of 500 W each for example will be used to exploit a more extensive range of wind speeds more effectively than 1 single drive of 1500 W. Hence the lower limit of the starting torque and the corresponding contribution of the photovoltaic energy converter 20 used to make the wind turbine 30 turn effectively as determined by the energy synergy management system 60 may be even further lowered.

As described above, the tubular structure supports an upward airflow through the wind turbine and favours the evacuation of air through the pales of the spherical wind turbine as well as the rotational movement of the wind turbine. Hence the constructive support of the solar generator is uniquely constituted as an aerodynamic synergy backbone improving the efficiency of the wind generator. It does so by further lowering the starting point of the wind turbine in function of the wind velocity and hence extending its productive range.

Depending on the level of integration, the heat can also be channelled at least partially to the aerodynamic backbone of the electrical power generation system as described above. This increased upward airflow through the wind turbine results in increased rotational movement of the wind turbine even without wind or at very low wind speeds that normally could not be exploited.

This represents the physical aspect of the synergy between the 2 generators.

Further, the electrical aspect of the synergy further improves the efficiency of the wind generator. In a preferred embodiment it does so by using the solar generator to provide electrical power momentarily to drive the wind-turbine, as mentioned above.

Indeed, in a preferred embodiment, an energy synergy management system is further provided for managing and controlling the energy produced by wind generator 30 and solar cell 20, by controlling the power that is supplied to DC motor 25, i.e. the current generating unit.

The energy synergy management system turns this action on specifically at wind speeds close to the starting point of the wind turbine, again lowering said starting speed and starting torque needed to overcome the system inertia, thus supporting the wind generator to turn at optimal efficiency and extending its productive range.

This represents the first level of electrical synergy between the 2 generators.

Further levels will become clear in the detailed description below.

The following detailed description will further disclose the electrical and physical synergy between the 2 energy sources and generators of the hybrid electrical power generation system according to the invention in case it is managed by an adaptive closed loop control system as part of the distributed co-generation system. The embedded intelligence of such control system allows deriving patterns of occurrence of both ambient energies and other values related to the electrical power generation system. From there the energy synergy management system constructs the corresponding rules for maximum local efficiency and helps the user to learn about the power generation/consumption patterns in his/her house, for example by generation/usage pattern discovery.

The present energy synergy management system is also designed to allow the management of the electrical power generation system in conjunction with other local electrical power generation units such as a fuel cell, for example a Solid Oxide Fuel Cell (SFOC), Polymer Electrolyte Fuel Cells (PEFC) or other Combined Heat & Power units, which produce both heat and electrical power. It is also designed to help coordinating the electrical energy flows between co-users in a multi-entity dwelling using the same electrical power generation system and energy synergy management system. This allows said co-users to share intelligently surpluses of individually generated energy, before feeding energy back to the grid.

SOFC's in general and specifically SOFC's running on biogas seem to be an ideal complement to the electrical power generation system for residential applications. A power range of 500W to more than 1 KW can be envisioned for a one-stack device that is attractive for a continuously available power supply working in synergy with the wind and solar power generators according to the invention.

SFOC's provide a source of electrical power that can be run continuously, if supplied continuously with the respective fuel, biogas, natural gas, C-based fuels or hydrogen. Specifically biogas is of interest, since it can be supplied from a variety of local sources, waste disposal, transformation and management sites or even residential septic tanks.

Additionally, the heat generated by these SOFC's can be used in the sense of a Combined Heat & Power unit, which produces both heat and electrical power.

The energy synergy management system of the local hybrid electrical power generation system according to the invention is also configured to provide information on local electrical generation patterns and results to a grid operator of the power network. In this way, the energy synergy management system closes the synergy loop between the local user/co-producer of electrical energy and the large-scale producer and grid supplier.

As can be seen from this short description the object of the invention represents a novel local electrical energy generation system which provides electrical energy from at least 2 ambient sources and is capable of creating a complete local power generation system in conjunction with other sources via its advantageous energy synergy management system.

As can be easily understood by people skilled in the art of small power generation, this construction will further be based on an innovative use of wind and solar power converting structures and materials, on a corresponding synergistic electrical generator/motor and on an energy synergy management system, including a learning unit and decision unit.

The person skilled in the art will also recognize that the invention is not limited by the description and the embodiments shown but has a much wider domain of potential applications.

For example additional photovoltaic generators can be used both as additional electrical energy providers and as aerodynamic interfaces to the aerodynamic synergy backbone for performance enhancement of the wind power generator according to the invention.

In the same way, solar thermal panels can be constructed in simple ways to form part of the aerodynamic synergy backbone and enhance the efficiency of the wind power generator according to the invention. Further embodiments will disclose the use of smart materials on certain parts of the decentralized electrical power generation unit to further enhance the efficiency of the wind power generator according to the invention.

The invention of the local electrical power generation system will now be further described in detail by explanations relating to the respective drawings.

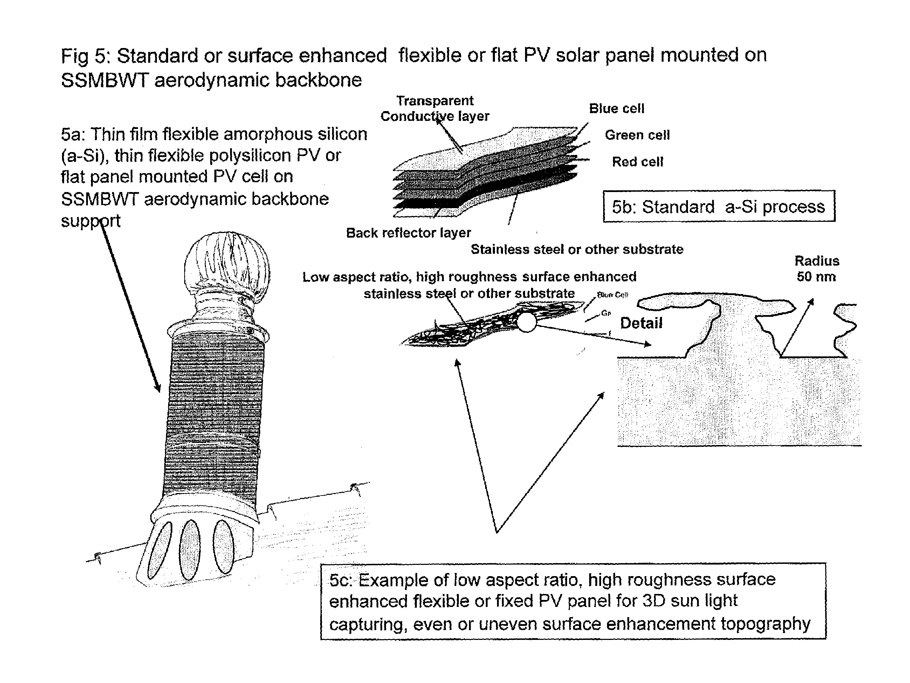

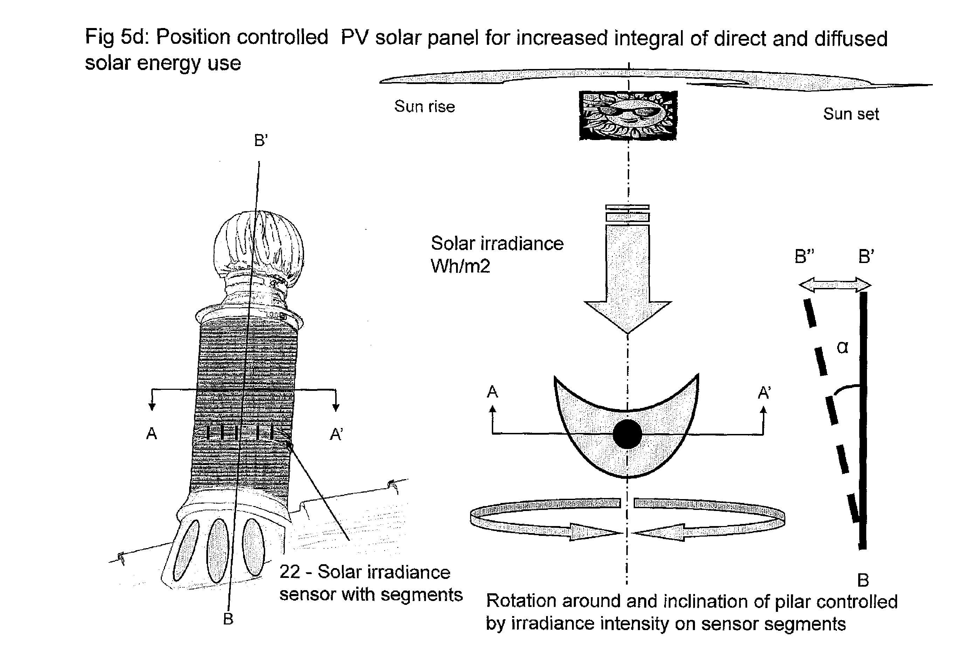

Referring now to Figure 5, the local electrical power generation system 1 according to the invention consists at least of an aerodynamic synergy backbone 10 comprising a photovoltaic energy converter 20 and a wind generator 30. It can further comprise an energy storing unit 40, such as an SOFC fuel cell generator. The whole system is built on a concentric structure that is mounted on a sloped or vertical roof of a building. The system is suitably connected to the components of the energy synergy management system 60 relating to functions of energy synergy management, transformation, temporary energy storage via an optional rechargeable battery and communication.

The aerodynamic synergy backbone 10 serves 2 functions, support for at least one photovoltaic energy converter 20 and being a feeding channel of warmer air to the wind generator 30. The shape of the aerodynamic synergy backbone 10 can be cylindrical as shown in Fig 3 or partially cylindrical with a concave portion housing at least one photovoltaic energy converter 20 as shown in Fig. 3a.

In its simplest form, be it in a vertical or a horizontal embodiment, it will be a passive component, having an internal structure favouring air flow, including hot air from the SOFC fuel cell 40, towards the wind generator 30 feeding this air from below into this wind generator facilitating a low starting torque or rotation without wind force.

It may also house energy storage means and in a more elaborate form it may house components of the energy synergy management system 60 and the energy storage unit 70, which may be rechargeable (see Figure 7).

In a preferable embodiment shown in Figure 5, at least parts of the outer and inner surface (110a and 110b) of the body of aerodynamic synergy backbone 10 are coated with a layer of electro-active material. This electro-active coating generates electricity from the expansions and contractions resulting from temperature changes and wind impact. Smart materials like PVDF for example are suitable for these applications. The electrical power thus generated is fed into the energy synergy management system 60 for transformation and storage. As shown in Figure 5a, a thin-film flexible amorphous silicon, a thin flexible polysilicon photovoltaic (PV) cell, or a flat panel-mounted PV cell is mounted on the backbone, or duct 10. Figure 5b shows some detail on this electro-active material, which is well known as such. As can be seen, for a thin-film flexible amorphous silicon photovoltaic cell, a plurality of layers is provided on a substrate, for example a stainless steel sheet. On this substrate is formed a back reflection layer, followed by a red cell, a green cell, a blue cell, and covered by a transparent conductive layer. Advantageously, the cell may be enhanced having a low aspect ratio with a high-density surface, and having a structured surface, which may be even or uneven to allow for more efficient three-dimensional sunlight capturing, as illustrated by Figure 5c.

As may be understood the photovoltaic energy converter 20 fitted on the concave portion of the aerodynamic synergy backbone 10 can be of the flexible foil or of the rigid solar panel type. The electrical power generated is fed into the energy synergy management system 60 for control of the transformation and storage.

In a particular embodiment as shown in Fig 5d, and for purposes of optimal position feedback control, photovoltaic energy converter 20 is fitted with a solar irradiance sensor 22. This sensor is either mounted on or in close proximity of the photovoltaic converter 20. Preferably, some of the photovoltaic surface of photovoltaic converter 20 itself may be used as an integrated sensor for irradiation measurement. Such sensor may provide information allowing to control the orientation of the solar cells on duct 10 with respect to the received sunshine to improve irradiance intensity efficiency. Also, it is possible to have a duct that can be slightly tilted, in a known manner for example by a motor, again to adapt to the irradiance intensity.

This is especially advantageous if flexible foil type solar converters are used, because the integration can be foreseen at the production stage simply by dedicating and connecting at least one row of solar cells at the top, central and bottom part of the foil independently. These sensors will then be scanned for maximum current and in case of 3 built-in sensors for the highest integral value delivered by the 3 elements.

In some advanced embodiments, the energy synergy management system 60 may use this information to inform the user about solar irradiation patterns and to control the horizontal angular and tilt position of the aerodynamic synergy backbone 10 on which photovoltaic converter 20 is mounted.

Indeed, as shown in Fig. 5d, the aerodynamic backbone can be motorized to rotate in order to position the photovoltaic energy converter 20 optimally with regards to the position of the sun. As also shown, the aerodynamic backbone can be motorized to tilt in order to position the photovoltaic energy converter 20 optimally with regards to the incidence angle of the solar irradiation.

Some of the photovoltaic surface of photovoltaic converter 20 may be used for irradiation measurement thus allowing for integrated sensors. In this advanced configuration, the energy synergy management system 60 may contain control circuitry required to regulate the rotation and the tilting according to the irradiation measured by the irradiation sensor 22, or by the integrated sensors, and the overall current delivered by photovoltaic converter 20 and sensed via an optional current sensor (not shown). The information on the irradiation level and occurrence over time and the power generated can be displayed via a remote terminal as transmitted for example via RF by the energy synergy management system 60.

In a typical embodiment, the surface of this photovoltaic energy converter 20 will be about 1 $m^2$. The power generated will be in the range of 50 W for one-layer silicon oxide flexible solar cells, around 120 W for multilayer silicon oxide flexible solar cells and up to 200 W for silicon solar panels.

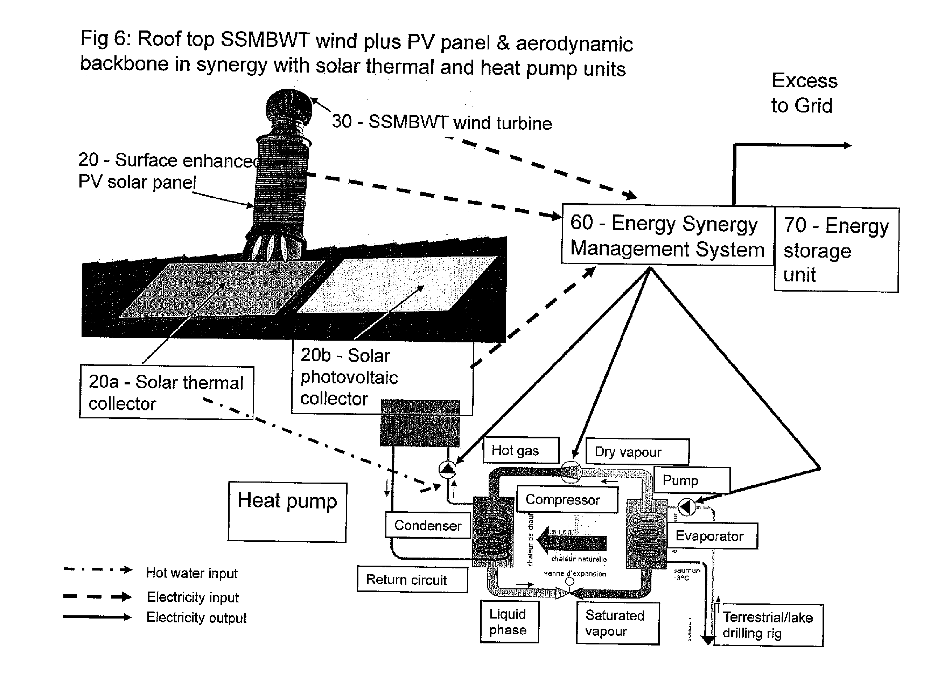

The photovoltaic energy converter 20 may be sized to fulfil the needs of power generation and according to the invention can be optimized with regards to its efficiency and used for the optimization of the wind generator 30, as also explained above, for advanced embodiments. As mentioned above, it can also be complemented by an additional photovoltaic surface 20a (as also shown Figures 6 and 7) that can be integrated with the aerodynamic synergy backbone 10 and connected to the energy synergy management system 60 for power transformation and storage.

The body of wind generator 30 can be made of at least one layer of steel, aluminium, various alloys, ceramics, plastic, carbon, fibre glass, laminates and the like or combinations thereof. Other parts like the central axis of the wind generator and other supporting parts can be made of ultra-light material like aluminium foam or carbon.

Now that the basic elements of the local electrical power generation system have been disclosed, some more advanced embodiment will be explained. In one such embodiment, the aerodynamic synergy backbone 10 becomes an active component of the local electrical power generation system 1.

Figure 6 shows an alternative arrangement where the wind turbine is not only combined with a photovoltaic cell fitted to the backbone, but where further a conventional photovoltaic cell, and/ or a conventional thermal solar cell is fitted to a rooftop. This system may further be coupled to a heat pump system that is used for heating the house below the rooftop. The energy synergy management system is in this case programmed to manage all energy sources, and to control the operation of the heat pump. Any excess energy generated by the cells and the wind turbine may be fed back into the main electricity network, i.e. the grid.

Further, as shown in Figure 7, the system may be rendered more intelligent when used for example for heating a passive house. In this case, wind generator 30 is mounted on a duct 10 that is normally used as a gas-heating or other clean-heating chimney system, or even as a building ventilation system. Again, a solar cell 20 is fitted to the duct, and other solar panels, photovoltaic 20b and/or thermal 20a, may be provided on the rooftop, all being linked to the energy synergy management system 60, and to a heat pump 65 for heating the house/building. A self-contained local ambient sensing unit 45 is further provided, for example on the rooftop. This unit may measure ozone, humidity, $CO_2$, ultrasound 3D wind speed and direction, the wind force, the rpms of the wind generator and the generated energy as a function thereof, the generated energy of the solar panel(s), the solar irradiation, etc.

Advantageously, ambient sensing unit 45 may incorporate a GPS to provide position information. All information is coupled to the energy synergy management system 60, thus allowing for full-scale control of the generated energy. A multimedia graphic user interface 80 may be coupled to the energy synergy management system so as to allow a user to program the system 60, or to adapt it to certain information derived from the measurements, as will be explained in more detail further on.

Outside applications like an interface to local weather stations and GPS data can be incorporated into the system for networking purposes.

In a further advanced embodiment, the electrical power delivered by the photovoltaic converter 20 is used momentarily to overcome the starting torque of the wind generator 30. For these purposes the wind generator 30 may be fitted with a wind speed sensor.

This sensor can either be the ambient sensing unit 45, see Figure 7, or a simple anemometer, and is either mounted on or in close proximity of the wind generator 30, positioned to measure the wind speed at a suitable location with regards to its incidence on the spherical wind turbine 30.

Also in this advanced configuration, the energy synergy management system 60 contains the control circuitry to decide on using the electrical power delivered by the photovoltaic converter 20 or energy storage unit momentarily to overcome the starting torque of the wind generator 30. These momentary interventions may thus be controlled by the wind speed measured by the anemometer and decided by the energy synergy management system 60 at wind speeds that are close to the known starting speed of the wind generator 30. During these short interventions the current generating unit 25, i.e. the DC drive functions as a starter motor and turns to its generator function once the rotation of the spherical wind turbine 30 allows for continued efficient power generation.

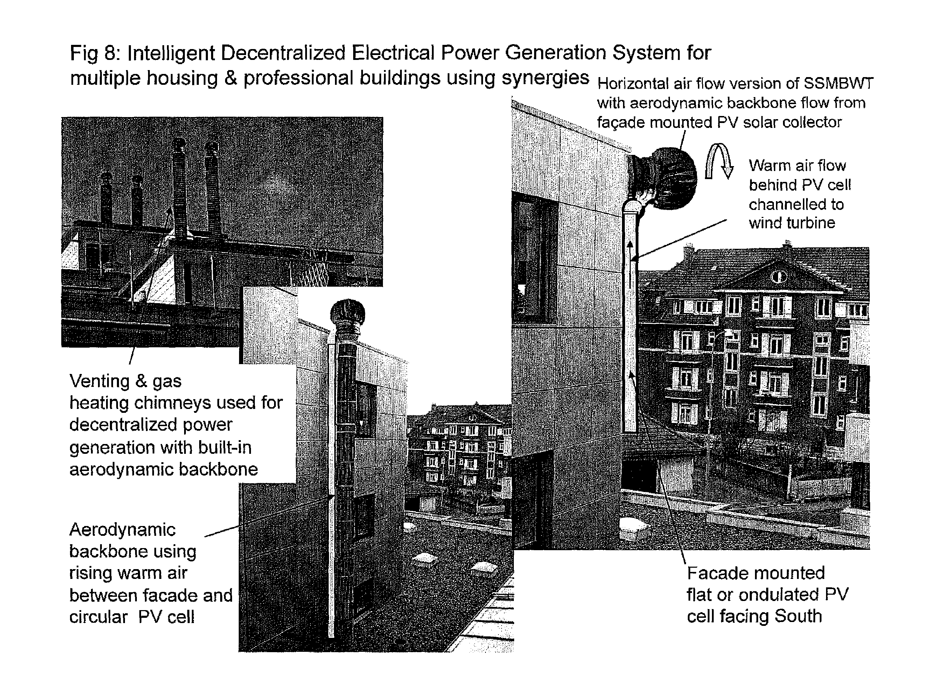

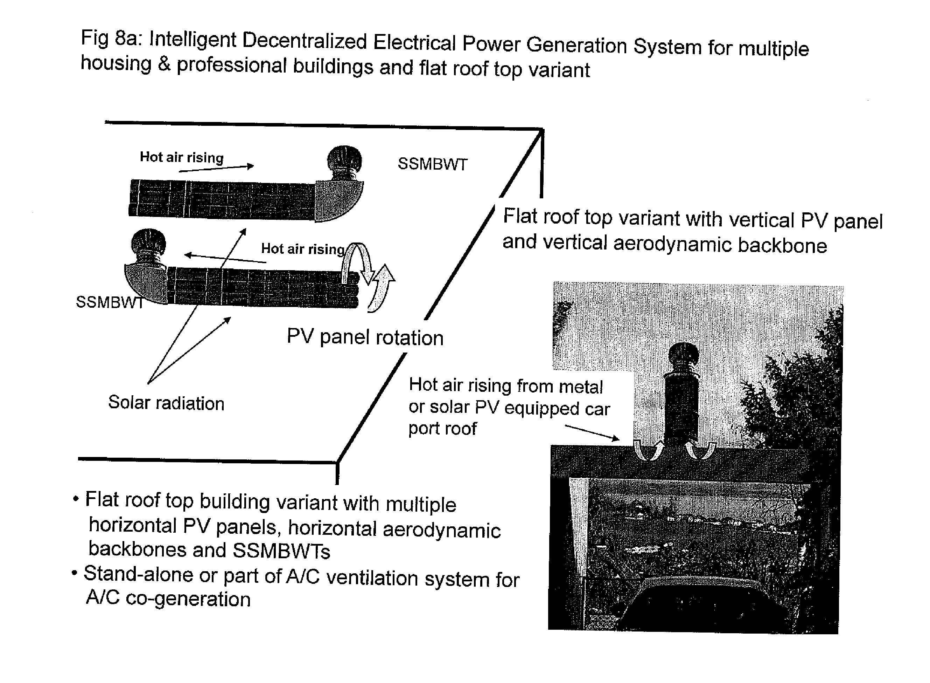

Figure 8 shows an example of an intelligent Decentralized Electrical Power Generation System for multiple housing & professional buildings using synergies. Venting & gas heating chimneys used for decentralized power generation with built-in aerodynamic backbone are provided on rooftops of buildings. The aerodynamic backbone 10 may thus use rising warm air between the facade of a building and circular photovoltaic cell fitted to the backbone, or duct 10. In this manner, any warm air flowing behind the PV cell 20 may be channelled to wind turbine 30 thus helping the latter to rotate, thereby reducing initial rotation friction.

IN an alternative arrangement, the wind generator may be fitted horizontally on the duct, as shown in the right-side of Figure 8, where a horizontal airflow version of the SSMBWT with aerodynamic backbone is shown.

Figure 8a shows another alternative arrangement by way of an Intelligent Decentralized Electrical Power Generation System for multiple housing & professional buildings and flat rooftop variant. Again, the same principle is used by using the rising hot air by channelling it through the backbone to the wind generator.

As shown, such flat rooftop variant with vertical PV panel and vertical aerodynamic backbone may also be mounted on a car port to recuperate the rising hot air from the car, or simply from the space below the car port. Further, such flat rooftop building may have as a variant multiple horizontal PV panels, horizontal aerodynamic backbones and SSMB Wind turbines, and may be stand-alone or part of an A/C ventilation system for A/C co-generation.

Figure 9 shows an example of a graphic user interface 85, as mentioned above with respect to figure 7. This interface may be a multilevel semiotic graphic user interface of the Energy Synergy Management System. This graphical user interface and the interactive firmware of the Energy synergy management system may be conceived according to the technology describe din co-pending application WO 2007/022911, in the name of the present Applicant, and entitled "Multilevel Semiotic and Fuzzy Logic User and Metadata Interface Means for Interactive Multimedia System having Cognitive Adaptive Capability". For all purposes of adaptive control, communication and graphic representation this document is fully incorporated into the present disclosure. This figure 9 shows a possible display of the interface when hooked to the energy synergy management system of the present invention.

Figure 9a shows an example of some more detail of such Graphic User interface, for example fitted into a PDA, and displayed on the PDA screen. Each "branch may represent an active multilevel semiotic symbol, as explained in the above-referenced co-pending application. For example, by selecting such symbol one or more choices may be made. For instance, by clicking once on the symbol representing the flexible solar collectors, the solar irradiance information may be provided. On the other hand, two clicks on the same symbol may provide the instantaneous current, whereas three clicks may correspond to the displaying of information such as the average radiation for the past year.

Figure 10 shows an example of using the present Intelligent Decentralized Electrical Power Generation System for Fixed Applications. As shown, the wind turbine may be mounted on an antenna pole, which may be partly surrounded by solar cells. In this case, the pole may constitute the aerodynamic backbone allowing for airflow up to the turbine. Other examples show the arrangement fitted on top of a traffic light, thus enabling powering of the light, or on an emergency call station. Again, a self-contained local ambient sensing unit may be provided to improve efficiency of operation by taking into consideration the measurements provided by such sensor.

Instead of fixed applications, it is also possible to integrate the present hybrid system into mobile applications, such as fitting it to movable objects such as a vehicle, like a car or a truck, or a boat, etc.

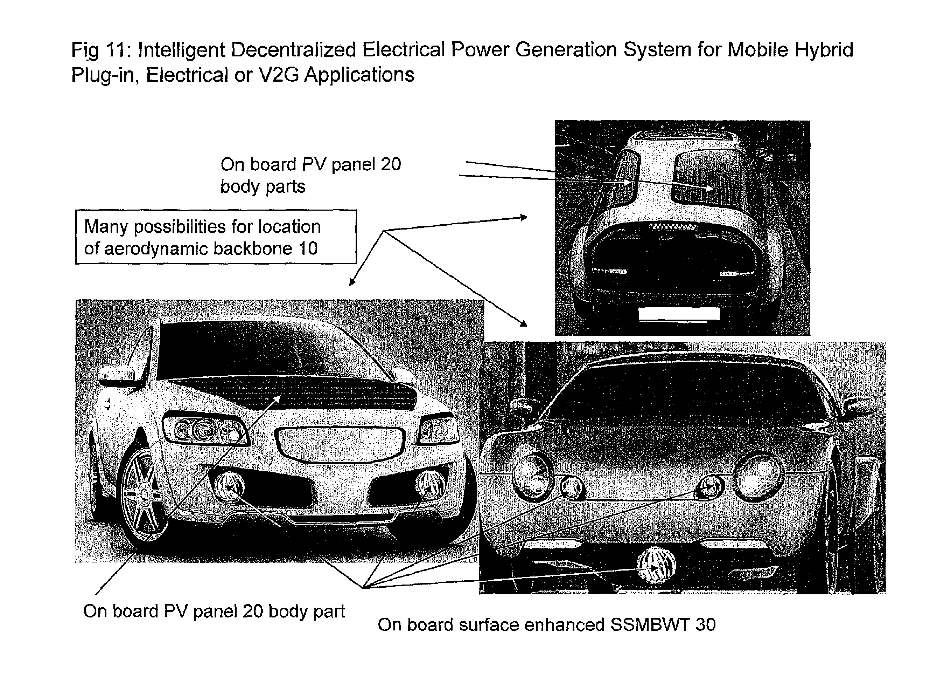

In this respect, figure 11 shown an example of the present intelligent Decentralized Electrical Power Generation System for Mobile Hybrid Plug-in, Electrical or V2G Applications. Many possibilities exist for fitting the photovoltaic cell, for example on the hood of a car, or on its roof. Also, the wind generator may be fitted for example in the front grille, as shown in figure 11. The aerodynamic backbone can of course also be provided at different locations, as may be understood by a skilled person.

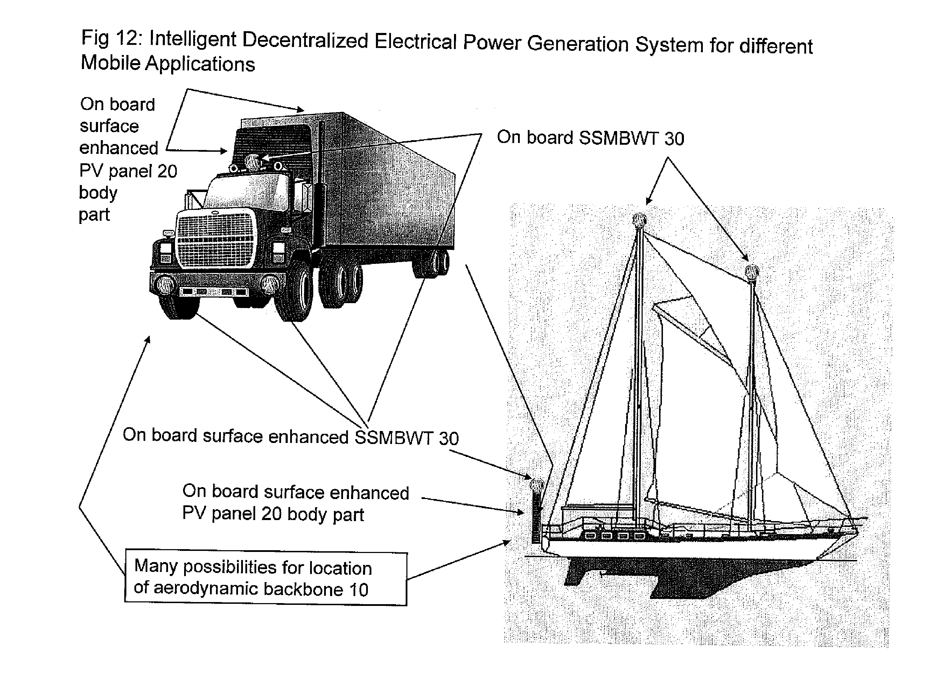

Figure 12 shows another example where the present intelligent Decentralized Electrical Power Generation System is used for different Mobile Applications, where example are shown of possibly fitting the photovoltaic cells, the wind turbine and the backbone.

Having described several preferred embodiments of this invention, it will now be apparent to one of skill in the art that other embodiments incorporating its concept may be used. It is felt, therefore, that this invention should not be limited to the disclosed embodiments, but rather should be limited only by the scope of the appended claims.

**Claims**

1. Hybrid electrical power generation system (1) comprising:

   a duct (10) constituting an aerodynamic backbone and comprising a wind generator (30) and a photovoltaic energy converter (20), and
   a current generating unit (25),

   **characterised in that** the wind generator (30) is a vertical axis wind turbine (VAWT), that the photovoltaic energy converter (20) is a solar cell positioned in the immediate vicinity of said duct (10), and that the wind generator (30) and the photovoltaic energy converter (20) are connected to and arranged so as to both power the current generating unit (25).

2. Hybrid electrical power generation system according to claim 1, further comprising an energy storage unit (70) that is connected to said current generating unit (25).

3. Hybrid electrical power generation system according to claim 2, wherein said energy storage unit (70) is rechargeable.

4. Hybrid electrical power generation system according to anyone of the preceding claims, further comprising an energy synergy management system (60) for managing and controlling the powering of said current generating unit (25).

5. Hybrid electrical power generation system according to claim 4, wherein said energy synergy management system (60) has an electrical current output arranged to drive said wind generator (30).

6. Hybrid electrical power generation system according to anyone of the preceding claims, wherein said wind generator (30) is a substantially spherical multi-blade wind turbine (SSMBWT).

7. Hybrid electrical power generation system according to anyone of the preceding claims, wherein said photovoltaic energy converter (20) is a flexible photovoltaic solar cell surrounding at least partly said duct.

8. Hybrid electrical power generation system according to anyone of the preceding claims, further comprising an ambient sensing unit (45) capable of detecting at least solar irradiance and wind direction and wind speed.

9. Hybrid electrical power generation system according to anyone of the preceding claims, wherein said energy synergy management system (60) is arranged to control the rotational speed of said wind generator (30).

10. Hybrid electrical power generation system according to anyone of the preceding claims, further comprising a layer of electro-active material applied to said duct (10) for generating electricity from the expansions and contractions resulting from temperature changes and wind impact, and being connected to said current generating unit (25).

11. Hybrid electrical power generation system according to anyone of the preceding claims, wherein said duct (10) is mounted on a sidewall or on a roof of a building.

12. Hybrid electrical power generation system according to anyone of the preceding claims, wherein said duct (10) is a chimney duct.

13. Hybrid electrical power generation system according to claim 11, wherein said duct (10) is motorised and mounted such that it is capable of being rotated and/or tilted with respect to said building.

14. Hybrid electrical power generation system according to claim 4, wherein said energy synergy management system (60) comprises a graphical user interface (80) for controlling and maintaining the energy synergy management system (60).

15. Hybrid electrical power generation system according to anyone of the preceding claims, wherein said VAWT (30) is coated with a layer of photovoltaic material.

16. Hybrid electrical power generation system according to anyone of the preceding claims, wherein said VAWT (30) is coated with a layer of electro-active material.

17. Movable object including a hybrid electrical power generation system (1) according to anyone of the preceding claims.

**Figure 1**: Wind energy conversion & Betz' theory compared to real wind impact conditions and response of prior art wind turbines

3D & turbulent wind flow and impact directions

ΔP pressure drop

Theoretical « spot » wind mass & impact direction

D

HAWT © US 7,348,683

Betz' theory : $P_W = \frac{1}{2} \rho \times S \times V^3$

Power extractable from wind energy

Wind speed

Air density

Surface impacted by wind mass
-> Circle for HAWT: $\pi \times r^2$
~ Rectangle for Savonius VAWT
~ Ovoid surface for Darrieus VAWT

Real wind impact is anisotropic, has continuously varying directions in 3D, in speed, in air density and impact directions

EP 2 128 439 A1

## Fig 1a: Prior art roof top wind turbine and solar collector

Single family residence with
axisymetric stator and rotor VAWT
wind turbine and
separate solar collector

Power at 15 m/s (54 km/h): 1.3 kW
Starting speed: 2m/s (7km/h)
Weight: 800 kg
Diameter/Height: 4m/1.5m
© Stateolien GSE 4

EP 2 128 439 A1

Fig 1b: Prior art mobile applications of wind turbine and solar collector energy generation

COPYRIGHT: (C)1998,JPO

COPYRIGHT: (C)2001,JPO

COPYRIGHT: (C)2002,JPO

**Figure 2** : Betz' theory compared to real wind impact conditions and response of substantially spherical multi-blade wind turbines (SSMBWT)

3D & turbulent wind flow and impact directions

Air deviation and evacuation directions, 360°over « h » and« d »

SSMBWT rotation and 3D direction of air evacuation

Theoretical « spot » wind mass & impact direction

D

D

Betz' theory

$$P_W = \frac{1}{2} \rho \times S \times V^3$$

Power extractable from wind energy

Wind speed

Air density

Negative $\Delta p$ vs mounting structure = upward priming airflow

Surface impacted by wind mass
~ 1/2 sphere: $2\pi \times r^2$
-> ~ 2 times the prior art geometrical surface (HAWT)

**Real** wind impact is anisotropic, has continuously varying directions in 3D, in speed, in air density and impact directions

EP 2 128 439 A1

**Figure 3:** Roof top SSMBWT wind plus photovoltaic solar energy & aerodynamic backbone on gas heating chimney or forced venting system in conjunction with thermal solar panels

Flexible or fixed photovoltaic solar panel support and aerodynamic backbone 10

wind generator 30

Current generating Unit 25

solar panel housing

Fixed or flexible solar panel 20

Existing gas heating chimney or forced venting outlet 10

Combined aerodynamic backbone 10 of thermal and PV solar panel housing with gas heating chimney or forced venting outlet

Air inlets 35 for warm air from below the thermal and PV solar panels, from the roof or facade surface

3e: $P_{SY} = P_W \times \Sigma_w + P_S \times \Sigma_s$

EP 2 128 439 A1

**Figure 3a**: Aerodynamic backbone and optimal use of direct and diffuse sun light to increase the integral of solar energy use

Flexible solar cell support and aerodynamic backbone

spherical or ovoid or ellipsoidal

on both sides or on one side only

flat surface

Maximum radius: $r_{max}$ = max. bending radius of Flexible PV laminates

Standard

Optimized

Maximum/day

$T(h)$

6    11    13    18

Diffuse light optimization potential

concave

concave flexible or rigid with concentrator

warm air rising inside -> upward priming airflow

aerodynamic backbone cross-sections A-A'

Air inlets 35

EP 2 128 439 A1

# Fig 4: Roof top SSMBWT embodiments for wind energy to electrical energy conversion

30
Ø 40 cm
to > 1.5m

Friction transmission element

Triple (incl. central)

25 Single

25 Double

central with internal reductor

Wrap around Stator

PM rotor

Single or multiple horizontal

n [tr / min]
8000
6000
400 W
4000
2000
200 400 600 800 1000 M [mNm]
2.0 4.0 6.0 8.0 I [A]

Friction transmission

SSVAWT wind speed 3m/s -> 60 rpm

For example wind speed: 3m/s
-> DC motor/generator -> 60 x 50 = 3000 rpm
-> ~ 3 to 5 Ampere theoretical charging current

EP 2 128 439 A1

## Fig 4a: Improved SSMBWT wind turbine embodiment

**4a1:** Inside and ourside surface of SSMBWT blades enhanced by surface treatment

**4a2:** Single or multiple vertical or horizontal switcheable DC motor/generator drives-> power generation is load adaptable to effective wind power 25a, 25b, 25c

**4a4:** SSMBWT priming airflow is further supplied by current from solar cell at certain sub-efficient wind speeds and SSMBWT rpm's (at < 2 m/s = for example only) -> lower power generation starting rpm

**4a3:** Warm air rising inside aerodynamic backbone
-> upward priming airflow
-> lower starting rpm for power generation

## Fig 4b: Further improved SSMBWT wind turbine embodiment

36 - Savonius type turbine or second, smaller SSMBWT added to lower starting wind speed and lower power generation rpm

Secondary SSMBWT Drive rotation

Secondary SSMBWT drive, internal gearing & very low friction bearing

37 High roughness surface enhanced SSMBWT blades

Main SSMBWT drive rotation

Axis 31

Main drive friction transmission

Very low friction bearing 32

Main drive DC motor/generator rotor inertia to be overcome

EP 2 128 439 A1

# Fig 5: Standard or surface enhanced flexible or flat PV solar panel mounted on SSMBWT aerodynamic backbone

5a: Thin film flexible amorphous silicon (a-Si), thin flexible polysilicon PV or flat panel mounted PV cell on SSMBWT aerodynamic backbone support

Transparent Conductive layer

Blue cell

Green cell

Red cell

5b: Standard a-Si process

Back reflector layer

Stainless steel or other substrate

Low aspect ratio, high roughness surface enhanced stainless steel or other substrate

Radius 50 nm

Blue Cell

Gr

Detail

5c: Example of low aspect ratio, high roughness surface enhanced flexible or fixed PV panel for 3D sun light capturing, even or uneven surface enhancement topography

## Fig 5d: Position controlled PV solar panel for increased integral of direct and diffused solar energy use

Sun rise

Sun set

Solar irradiance
Wh/m2

B"    B'

α

A    A'

22 - Solar irradiance
sensor with segments

Rotation around and inclination of pilar controlled
by irradiance intensity on sensor segments

EP 2 128 439 A1

## Fig 6: Roof top SSMBWT wind plus PV panel & aerodynamic backbone in synergy with solar thermal and heat pump units

Excess to Grid

30 - SSMBWT wind turbine

20 - Surface enhanced PV solar panel

60 - Energy Synergy Management System

70 - Energy storage unit

20b - Solar photovoltaic collector

20a - Solar thermal collector

Heat pump

Hot gas

Dry vapour

Pump

Compressor

Condenser

Evaporator

Return circuit

Liquid phase

Saturated vapour

Terrestrial/lake drilling rig

- · - · ▶ Hot water input
- - - ▶ Electricity input
——— ▶ Electricity output

EP 2 128 439 A1

## Fig 7: Intelligent Decentralized Electrical Power Generation System for Passive House

Gas heating or other clean chimney or building ventilation system

30 - SSMBWT wind turbine

- Ultrasound 3D wind speed & direction
- Wind force
- SSMBWT rpm & kWh
- Solar PV panel kWh
- Solar PV panel position
- Solar irradiation
- Ozone
- Temperature
- Humidity
- $CO_2$
- GPS position information
- Battery

kWh, rpm, kWh, wind force

kWh, position

20 - photovoltaic collector

10 - Aerodynamic backbone

- Solar irradiation/h
- Ozone
- Temperature
- Humidity
- $CO_2$

45 - Self-contained local ambient sensing unit
- Ozone
- Humidity
- $CO_2$

20a - Solar thermal collector

20b - Solar photovoltaic collector
kWh

- Ultrasound 3D wind

Heat pump
kWh

60 - Energy Synergy Management System

Grid

kWh    Info & kWh

Networked user group

Multimedia Graphic User Interface

- Solar irradiation
- Temperature
- Battery charge

Battery inside, charged by cell

EP 2 128 439 A1

# Fig 8: Intelligent Decentralized Electrical Power Generation System for multiple housing & professional buildings using synergies

Horizontal air flow version of SSMBWT with aerodynamic backbone flow from façade mounted PV solar collector

Warm air flow behind PV cell channelled to wind turbine

Venting & gas heating chimneys used for decentralized power generation with built-in aerodynamic backbone

Aerodynamic backbone using rising warm air between facade and circular PV cell

Facade mounted flat or ondulated PV cell facing South

EP 2 128 439 A1

## Fig 8a: Intelligent Decentralized Electrical Power Generation System for multiple housing & professional buildings and flat roof top variant

Hot air rising

SSMBWT

Hot air rising

SSMBWT

PV panel rotation

Solar radiation

Flat roof top variant with vertical PV panel and vertical aerodynamic backbone

Hot air rising from metal or solar PV equipped car port roof

- Flat roof top building variant with multiple horizontal PV panels, horizontal aerodynamic backbones and SSMBWTs
- Stand-alone or part of A/C ventilation system for A/C co-generation

Fig. 9: Multilevel semiotic graphic uUser interface of Energy Synergy Management System 60

Fig 9a : Detail of Graphic User interface PDA screen of Energy Synergy Management System

Active multilevel semiotic symbol

- One click: solar irradiance
- Two clicks: instantaneous current
- Three clicks: Average/year

EP 2 128 439 A1

Fig 10: Intelligent Decentralized Electrical Power Generation System for Fixed Applications

SSMBWT wind turbine

10a: GSM & other antenna sites

45 - Self-contained local ambient sensing unit

30 - SSMBWT wind turbine

Solar Collector Surface incl. feed-through aerodynamic backbone

10c: Traffic light incl. feed-through aerodynamic backbone

Detail

10b: Highway Emergency Call Station incl. feed-through aerodynamic backbone

Fig 11: Intelligent Decentralized Electrical Power Generation System for Mobile Hybrid Plug-in, Electrical or V2G Applications

On board PV panel 20 body parts

Many possibilities for location of aerodynamic backbone 10

On board PV panel 20 body part

On board surface enhanced SSMBWT 30

EP 2 128 439 A1

Fig 12: Intelligent Decentralized Electrical Power Generation System for different Mobile Applications

On board surface enhanced PV panel 20 body part

On board SSMBWT 30

On board surface enhanced SSMBWT 30

On board surface enhanced PV panel 20 body part

Many possibilities for location of aerodynamic backbone 10

Europäisches Patentamt
European Patent Office
Office européen des brevets

## EUROPEAN SEARCH REPORT

Application Number

EP 08 15 6970

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 34 07 881 A1 (KRIEB FRANZ KARL) 12 September 1985 (1985-09-12) * abstract; figures 2,4,6 * | 1-17 | INV. F03D9/00 F03D9/02 |
| X | WO 2007/007103 A (LITTLE MALCOLM HARCOURT [GB]) 18 January 2007 (2007-01-18) * abstract; figures 1-5 * | 1-17 | |
| X | DE 10 2005 037396 A1 (GIRA ULRIKE [DE]; ZIMMERMANN BERND [DE]) 15 February 2007 (2007-02-15) * the whole document * | 1-17 | |
| X | FR 2 683 864 A (SORELEC [FR]) 21 May 1993 (1993-05-21) * abstract; figures 1,2 * | 1-17 | |
| X | US 2007/194573 A1 (LAMBERTSON MICHAEL C SR [US] LAMBERTSON MICHAEL CARL [US]) 23 August 2007 (2007-08-23) * abstract; figures 1,2 * | 1-17 | TECHNICAL FIELDS SEARCHED (IPC) |
| X | US 4 319 141 A (SCHMUGGE FREDERICK K) 9 March 1982 (1982-03-09) * the whole document * | 1-17 | F03D |
| X | US 2005/218657 A1 (WEESNER BRENT E [US] ET AL WEESNER BRENT EDWARD [US] ET AL) 6 October 2005 (2005-10-06) * the whole document * | 1-17 | |

The present search report has been drawn up for all claims

| Place of search | Date of completion of the search | Examiner |
|---|---|---|
| Munich | 27 February 2009 | Avramidis, Pavlos |

EPO FORM 1503 03.82 (P04C01)

## ANNEX TO THE EUROPEAN SEARCH REPORT
## ON EUROPEAN PATENT APPLICATION NO.

EP 08 15 6970

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2009

| Patent document cited in search report | | Publication date | Patent family member(s) | | Publication date |
|---|---|---|---|---|---|
| DE 3407881 | A1 | 12-09-1985 | NONE | | |
| WO 2007007103 | A | 18-01-2007 | EP | 1904743 A1 | 02-04-2008 |
| | | | GB | 2428258 A | 24-01-2007 |
| DE 102005037396 | A1 | 15-02-2007 | NONE | | |
| FR 2683864 | A | 21-05-1993 | NONE | | |
| US 2007194573 | A1 | 23-08-2007 | NONE | | |
| US 4319141 | A | 09-03-1982 | NONE | | |
| US 2005218657 | A1 | 06-10-2005 | NONE | | |

EPO FORM P0459

For more details about this annex : see Official Journal of the European Patent Office, No. 12/82

**EP 2 128 439 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005052362 A2
- WO 2005052362 A3
- US 20050180851 A1
- WO 03067081 A1
- WO 02068818 A1
- WO 2006007696 A1
- WO 02057625 A1
- WO 2004027259 A1
- DE 3303898 C2
- WO 2006046337 A1
- WO 03019006 A1
- WO 2006063380 A
- WO 03027497 A1
- WO 2005108783 A1
- US 20030209912 A1
- US 4857753 A
- WO 02053908 A1
- WO 2006096091 A1
- WO 9807981 A
- WO 2007007103 A
- DE 9314187 U1
- DE 19919133 A1
- US 5394016 A
- WO 2006059062 A1
- DE 2914957 A1
- DE 19644890 A1
- WO 2004063564 A1
- WO 2006050711 A1
- US 20020109358 A1
- FR 2801937 A1
- WO 0214698 A1
- WO 2006053356 A
- WO 03083294 A1
- US 4047834 A
- WO 0161187 A1
- US 5269647 A
- US 6582291 B2
- US 7132760 B2
- US 20070284885 A1
- GB 2432889 A
- US 20030175109 A1
- US 6249058 B1
- WO 2005075822 A1
- WO 2005076445 A
- EP 1045987 B1
- US 20060010867 A1
- US 7124586 B2
- EP 1628093 A2
- US 4779006 A
- US 4462213 A
- US 6674263 B2
- WO 9902856 A
- WO 03016716 A1
- WO 2007001154 A1
- WO 2004109099 A1
- WO 2006108264 A1
- WO 2005100878 A1
- WO 2006060761 A1
- WO 2005100783 A1
- WO 2005047101 A1
- WO 2007025387 A1
- WO 03087571 A2
- WO 2006066502 A1
- WO 2007066207 A2
- US 6016015 A
- WO 200303813 A1
- EP 1731846 A1
- JP 2004080914 A
- US 7252165 B1
- US 20060272870 A
- US 20070282495 A1
- US 20040062059 A1
- JP 06237501 A
- JP 10184528 A
- JP 2001221146 A
- US 20040238237 A1
- JP 05015006 A
- JP 2002176702 A
- JP 10201008 A
- EP 0950857 A
- WO 2007022911 A

**Non-patent literature cited in the description**

- **Kira Grogg.** *Harvesting the Wind: The Physics of Wind Turbines,* 13 April 2005
- Solar Revolution. The MIT Press, 2006
- **Howard C. Hayden.** Solar Fraud. Vales Lake Publishing, 2004

- **Frölich C. ; R.W. Brusa.** Solar Radiation and its variation in Time. *Solar Physics,* 1981, vol. 74, 209
- **Bill Rohner.** Power to the people. *Energybiz Magazine,* January 2006, www.energycentral.com
- *Solar Grove,* 02 March 2007, http://www.insidegreentech.com/814/solar-carports
- **Carsten Thomas R. et al.** *The Case for Decentralized Generation of Electricity,* 01 January 2005, vol. 29 (1), ISSN 01946730
- **Benjamin K Sovacool ; Richard F. Hirsh.** Energy and American Society- Thirteen Myths. Springer, 2007
- **Charles Miles.** Survey of Urban Wind Energy Technology. *Sustainability and Built Environment,* October 2006
- **PO-Wa Lee et al.** Power Distribution Systems for Future Homes. IEEE, PEDS, 1999
- *International IEEE Conference on Power Electronics and Drive Systems, PEDS 99,* July 1999
- **PO-Wa Lee et al.** *Power Distribution Systems for Future Homes,* 1999
- **James D. Bouford ; Cheryl A. Warren.** Many States of Distribution. © IEEE Power & Energy Magazine, July 2007
- **Shrikrishna A. Khaparde.** Powering Progress. *IEEE Power & Energy Magazine,* July 2007
- **Richard Piwko et al.** What Comes First?. *IEEE Power and Energy Magazine,* November 2007, vol. 5 (6
- **Edgar A. DeMeo et al.** Accommodating Wind's Natural Behavior. *explore recent advances and insights for Wind Plant Integration*
- **J.G McGowan et al.** Wind Energy Explained. John Wiley & Sons, 2002
- The Photovoltaic Challenge. **Wim C. Sinke.** Materials Research Society
- Photovoltaics, Energy for the New Millennium. National Photovoltaics Program Plan 2000 -2004. U.S. Department of Energy, 2000
- Effect of Wind Development on Local Property Values. Renewable Energy Policy Project
- **Koray Ulgen ; Arif Hepbasli.** A Study on Evaluating the Power Generation of Solar-Wind Synergistic Systems in Izmir, Turkey. Taylor & Francis, 2003
- **Paul Kruger.** Alternative Energy Sources: The Quest for Sustainable Energy
- Solar Revolution. The MIT Press, 186
- Impact of Distributed Synergistic Wind Electric Power Conversion Systems on the Electricity Distribution System. American Institute of Aeronautics and Astronautics Inc, 1997
- **P.A. Lessing.** *A Synergistic Photovoltaic-Wind Power System for the National Data Buoy Center's (NDBC) Coastal Marine Automated Network,* 1997
- **Abdulhadi Varnham et al.** Soft-Computing Model-Based Controllers for Increased Photovoltaic Plant Efficiencies. *IEEE Transactions on Energy Conversion,* December 2007, vol. 22 (4
- **Suresh H. Jangamshetti et al.** Height Extrapolation of Capacity Factors for Wind Turbine Generators. *IEEE Power Engineering Review,* June 1999, ISSN 0282-1724/99/$10.00
- Drive Friendly. *IEEE power & energy magazine,* January 2008, vol. 6 (1
- **Mirecky Adam et al.** Architecture Complexity and Energy Efficiency of Small Wind Turbines. *IEEE Transactions on Industrial Electronics,* February 2007, vol. 54 (1